# EUROPÄISCHE PATENTSCHRIFT

(11) **EP 3 007 795 B1**
(45) Veröffentlichungstag und Bekanntmachung des Hinweises auf die Patenterteilung: **29.12.2021**
(21) Anmeldenummer: 14730850.6
(22) Anmeldetag: 13.06.2014
(51) Int. Cl.: B01D 24/00, C02F 1/40, C02F 3/08, B24B 55/03, C10M 175/00

(54) **FILTERANLAGE ZUM ENTFERNEN UND/ODER NEUTRALISIEREN VON UNGELÖSTEN ÖLEN, FETTEN UND SALZEN UND/ODER METALLABRIEBEN AUF UND IN WASSERHALTIGEN EMULSIONEN**
FILTER SYSTEM FOR REMOVING AND/OR NEUTRALIZING UNDISSOLVED OILS, GREASES, AND SALTS AND/OR METAL ABRASION DEBRIS ON AND IN EMULSIONS CONTAINING WATER
INSTALLATION DE FILTRATION PERMETTANT D'ÉLIMINER ET/OU DE NEUTRALISER DES HUILES, GRAISSES ET SELS NON DISSOUS ET/OU DES PARTICULES MÉTALLIQUES RÉSULTANT D'UNE ABRASION SUR ET DANS DES ÉMULSIONS CONTENANT DE L'EAU

(30) Priorität: 13.06.2013 DE 102013211032
(43) Veröffentlichungstag der Anmeldung: 20.04.2016
(73) Patentinhaber: NewFluid GmbH, 68165 Mannheim (DE)
(72) Erfinder: TILZ, Wolfgang, 68723 Schwetzingen (DE)
(74) Vertreter: Wohlfahrt, Jan Günther
(86) Internationale Anmeldenummer: PCT/EP2014/062320
(87) Internationale Veröffentlichungsnummer: WO 2014/198867

(56) Entgegenhaltungen:
- DE-A1-102007 049 845
- DE-A1-102009 043 110
- DE-A1-102009 043 110
- DE-A1-102009 043 110
- DE-A1-102010 028 116
- US-A- 5 599 457
- US-A- 5 599 457
- US-A1- 2006 157 397
- US-A1- 2006 157 397

## Beschreibung

Die Erfindung betrifft Filteranlage, eine Verwendung eines Filterelements und ein Verfahren zum Entfernen von Metallabrieben und/oder Neutralisieren von ungelösten Ölen, Fetten und Salzen aus/auf/in wasserhaltigen Emulsionen aus Behältern und Wannen die zur Vorhaltung und Lagerung von Emulsionen verwendet werden.

Filteranlagen zum Entfernen von ungelösten Ölen und Fetten auf wasserhaltigen Emulsionen aus insbesondere Behältern und Wannen die zur Vorhaltung und Lagerung von Emulsionen verwendet werden sind in vielfältigen Ausführungen bekannt. Für Emulsions-Behälter und Wannen werden meist Oberflächen- Bandskimmer eingesetzt, die den aufschwimmenden Öl-Fettfilm entfernen. Dabei wird ein mechanisch/elektrisch angetriebenes Endlosband in die Wanne oder den Behälter eingetaucht, so dass durch die Aufwärtsbewegung das am Endlosband anhaftende Öl/Fett von der Oberfläche der Emulsion herausgefiltert wird. Das Öl/Fett haftet am Endlosband.

Dieses wird dann über eine Umlenkrolle von der Aufwärtsbewegung auf eine Abwärtsbewegung umgelenkt und dann mittels Abstreifer vom Öl/Fettfilm befreit. Das Öl/Fett wird über eine horizontal abfallende Rinne in einem Behältnis (zum Beispiel ein Eimer) aufgefangen. Das so gereinigte Endlosband taucht dann wieder in die Wanne oder den Behälter, so dass durch die Ab-Aufwärtsbewegung des Endlosbands und über eine zweite Umlenkrolle das anhaftende Öl/Fett von der Oberfläche der Emulsion erneut herausgefiltert wird.

In der Praxis sind vielfältige Maschinen zur Bearbeitung von Werkstücken bekannt, die mittels Emulsion die Werkstücke und das Werkzeug kühlen und schmieren. Bei einer Computer gesteuerten Dreh/Fräs-Maschine werden z. B. zur Reibungsverringerung und Gleitung der bewegten Werkzeug- und Werkstückhalter verschiedene Schmier und Gleitmittel eingesetzt. Diese verhindern ein erhöhten Kraftaufwand bei der Bewegung und verhindern dabei ein festsetzen und somit einen Defekt der Maschine.

In der Praxis sind solche Schmierstoffe bekannt. Sie werden als sogenannte Bettbahnöle bezeichnet und bestehen meist aus Paraffin und naphtenbasischen Kohlenwasserstoffe mit Additiven. (z.B. Hersteller Firma Scharr Handelsname: Bettbahnöl CGLP ISO-VG (68) und (220). Diese Schmierstoffe werden während des Betriebes ständig zwischen die Gleitschienen der Werkzeug- und Werkstückhalter dosiert und bilden dabei einen dünnen Film und garantieren somit ein gutes Gleiten. Allerdings wird durch die Bewegung der Gleitschienen das Bettbahnöl an den Rändern der Gleitschienen herausgedrückt und muss somit nachdosiert werden. Zum Bearbeiten der Werkstücke mittels Werkzeuge wird zur Kühlung und Schmierung die Emulsion mittels Saug-Druckpumpe aus dem Behälter oder Wanne gefördert und mittels Düse auf die zu bearbeitende Stelle gespritzt. Die Kühl- und Schmierflüssigkeit, eine Emulsion, z.B. aus einem Gemisch aus Mineralöl, Emulgatoren, Stabilisatoren und Inhibitoren (zum Beispiel Hersteller Blaser, Handelsname: BLASOCUT^{®} BC 25 MD) wird mit 90-98% Wasser und 2-10% Blaser Mineralölgemisch vermischt. Beim Abfließen der Emulsion von dem Werkstück und dem Werkzeug wird das Bettbahnöl von den Rändern der Gleitschienen abgespült und in der Maschinenwanne und oder im Behälter aufgefangen, wo es sich auf der Oberfläche der Emulsion als ÖlFettfilm ansammelt. Des Weiteren entstehen bei der Bearbeitung durch Drehen, Fräßen oder Bohren usw. des Werkstücks viele Metallspäne, die mit der Emulsion und dem Bettbahnöl in die Wanne oder in den Behälter eingespült werden. Diese Metallspäne werden gesammelt und manuell oder automatisch aus der Maschine entnommen. Die Wanne oder der Behälter sind meist unterteilt in verschiedene Zonen, wo eine Trennung der Späne und der Emulsion erfolgt. Meist werden hier Lochsiebe eingesetzt, so dass sichergestellt ist, dass die Pumpe zur Förderung der Emulsion keine Späne ansaugt und dadurch in Ihrer Förderleistung gehindert wird. Dabei ist nachteilig, dass das Bettbahnöl den Abfluss der Emulsion behindert, so dass bei hoher Emulsionsumwälzung ein Niveaugefälle in der Wanne oder im Behälter entsteht was zum einen ein Überlaufen vor dem Sieb zur Folge hat und zum anderen, dass der Pumpe nicht genügend Emulsion zufließt.

Ein großes Problem entsteht durch die Oberflächenbenetzung mittels Bettbahnöl-Film, der einen Sauerstoffaustausch in die Emulsion verhindert und speziell im Stillstand eine erhöhte Keimbelastung durch Bakterien und Pilzbefall erfährt, was sich in starker Geruchsbildung und Verfärbung der Emulsion bemerkbar macht. Speziell an Wochenenden oder Urlaubzeiten, wenn die Emulsion längere Zeit steht und wenn zusätzlich Temperaturen über 30 °C entstehen, ist eine Gesundheitsgefährdung vom Bedienungspersonal und Umwelt nicht auszuschließen. Weitere Probleme entstehen durch Pilzfäden und Schleimbakterien. Diese verursachen häufig ein Verstopfen von Rohrleitungen und Sieben.

Um dieses zu vermeiden muss die Maschine mit Wanne und/oder Behälter mit großem Zeit- und Geldaufwand in regelmäßigen Abständen gereinigt und die Emulsion ausgetauscht werden. Kühlschmierstoffe müssen fachgerecht angewendet und nachweislich fachgerecht entsorgt werden, was nur von spezialisierten und zugelassenen Fachfirmen durchgeführt werden darf.

Aus der DE 4211123 C2 ist eine Vorrichtung und Verfahren zum Entfernen von Ölfilmen bekannt. Hierbei wird der Ölfilm beim Eintauchen eines Arbeitskörpers durch Adhäsion entfernt.

Aus der DE 4404010 C1 ist ein Ölskimmer mittels teilweise eintauchender Trommel bekannt, der durch ein umlaufendes Band den Ölfilm entfernt.

Aus der US 2006/0157397 A1 ist eine Vorrichtung zum Entfernen von Öl von einer Öl-haltigen Zusammensetzung bekannt.

Aus der US 5,599,457 ist eine Filteranlage und ein Verfahren zum Filtern von freien Ölen von einem Maschinenkühlmittel bekannt.

In der Online-Enzyklopädie Wikipedia wird beschrieben, dass durch Adhäsion oder auch die Anhangskraft der physikalische Zustand einer Grenzflächenschicht, die sich zwischen zwei in Kontakt tretenden Phasen ausbildet, also zwischen Feststoffen und Flüssigkeiten, bei einer Kombination aus Gravitation und Kapillarkraft, die treibende Kraft, zu einer inhomogenen Filmdicke führt, die unter Gas / Luftzufuhr zur Blasenbildung führt (Seifenblasen Prinzip).

Des Weiteren wird in Wikipedia beschrieben, dass sich durch die Kapillarität oder den Kapillareffekt das Verhalten von Flüssigkeiten verändert, wenn sie bei Kontakt mit Kapillaren, z. B. engen Röhren, Spalten oder Hohlräumen, in Feststoffen eintreten.

Der Erfindung liegt das technische Problem zugrunde, eine Filteranlage vorzuschlagen, die hinsichtlich Aufbau und Wirkungsweise besser als bekannte Verfahren, Vorrichtungen und Anlagen arbeitet. Erfindungsgemäß wird diese Aufgabe mit einer Filteranlage mit den Merkmalen des Anspruch 1 gelöst.

Die Aufgabe wird insbesondere gelöst durch eine Filteranlage zum Entfernen von Metallabrieben aus wasserhaltigen Emulsionen aus Behältern und Wannen und/oder zum Entfernen und/oder Neutralisieren von ungelösten Ölen, Fetten und Salzen auf/in wasserhaltigen Emulsionen aus Behältern und Wannen, wobei die Behältern und Wannen zur Vorhaltung und Lagerung von Emulsionen verwendet werden, die zur Kühlung und Schmierung von Werkstücken und Werkzeugen bei der Bearbeitung eingesetzt werden, wobei die Filteranlage Filterelemente (18, 24, 38, 45) aufweist, wobei die Filterelemente zumindest überwiegend aus zu einem kugelförmigen Körper zusammengefassten, nebeneinanderliegenden Kunststoffplatten bestehen, wobei als Basismaterial für die Kunststoffplatten ein Kunststoff mit einer Wasseraufnahmefähigkeit von größer 1% verwendet wird, wobei das Basismaterial für die Kunststoffplatten Polyamid ist, wobei die Filteranlage einen Zulauf und einen Ablauf umfasst, über die sie mit dem Behälter oder der Wanne verbunden sein kann und wobei die Filteranlage zum Absaugen der Emulsion aus den Behältern und Wannen einen Skimmer aufweist.

In einer bevorzugten Ausführungsform umfasst die vorliegende Erfindung eine Filteranlage zum Entfernen und/oder Neutralisieren von ungelösten Ölen, Fetten und Salzen auf/in wasserhaltigen Emulsionen aus e Behältern und Wannen, die zur Vorhaltung und Lagerung von Emulsionen verwendet werden, die zur Kühlung und Schmierung von Werkstücken und Werkzeugen bei der Bearbeitung eingesetzt werden, mit wenigstens einer Vorrichtung als tangentialer Zulauf in einen Emulgatorfilter, einem Injektor zur Gasanreicherung, einem Adhäsionsfilter mit automatischem Entlüfter und einem Öl-Sammelgefäß mit Ablauf, wobei die Filteranlage als Einheit die Emulsion die unlöslichen Öl- Fetttropfen mechanisch, physikalisch und biologisch behandelt, so dass dann die Öl- Fettschicht aus dem Filtersystem ausgeschieden wird. Bevorzugt weist die Filteranlage einen Kapillarfilter auf. Dieser ist bevorzugt dem Adhäsionsfilter nachgeschaltet ist.

Die Filteranlage weist zum Absaugen der Emulsion und des Öl-Fettfilms aus der Emulsions-Wanne/ Behälter einen Skimmer auf, wobei bevorzugt ein Skimmer Absaugungs-Anschluss von oben oder von unten, gegebenenfalls unter Verwendung einer Tauchpumpe vorgesehen ist.

Durch diese erfindungsgemäße Lösung wird eine Filteranlageneinheit vorgeschlagen, mit der Maschinen, Wannen und/oder Behälter mit der wasserhaltigen Emulsion vom Oberflächen-Öl-Fettfilm gereinigt werden können, so dass die nicht emulgierbare Öle/ Fette aus der Wanne und oder den Behältern entfernt werden und somit die Bildung von Pilz- und Schleimbakterienbefall verhindert wird. Dabei wird durch Zugabe von Gasen/Luft und durch die Adhäsion und die kapillare Reaktion das nicht emulgierbare Öl zurückgehalten und dann aus der Filteranlage ausgeschieden.

Durch den absaugenden Skimmer, der auch eine Tauchpumpe enthalten kann, wird die Emulsion und der Öl-Fettfilm, also die Emulsions-Oberfläche in der Wanne oder im Behälter gereinigt. Dabei wird sichergestellt, dass sich der aufschwimmende Öl/Fettfilm über den Rand des Schwimmkörpers einsaugt und zunächst wegen der geringeren Dichte auf der Oberfläche verbleibt. Der Schwimmkörper wird bevorzugt von einem eingekammerten Luftpolster an der Emulsions-Oberfläche getragen. Dabei wird dieser durch einen feststehenden Zylinder, der in den Schwimmkörper hineinragt, in Position gehalten. Zwischen dem Zylinder und dem Schwimmkörper besteht bevorzugt ein Spalt von einer Querschnittsfläche, die es zulässt, dass etwa 90% des Emulsionszufluss von unterhalb der Emulsionsoberfläche abgesaugt wird. Dieser Effekt stellt sicher, dass der Emulsion-Öl-Fettfilm-Anteil < 1/20 der abgesaugten Flüssigkeitsmenge ist, so dass die Rückhaltung in der Filteranlage kontrolliert ablaufen kann.

In einer weiteren vorteilhaften Ausführungsform des Skimmers ist der feststehende Zylinder mit einem geschlossenen Boden versehen, so dass dieser wie ein Becher ausgeführt ist. Da die meisten Wannen in Ihrer Konstruktion sehr niedrig sind und diese unterhalb der Maschine eingebaut sind und nur ein niedriger Emulsions-Füllstand entsteht, muss beim Absaugen auf eine Thrombenbildung durch Luft verhindert werden. Dieses wird durch die Positionierung des Absaugrohrs, bevorzugt im Zentrum des Bechers und des Schwimmkörpers erreicht. Mittels Abstandshalter wird das Rohrende fest im Becher fixiert, so dass die Emulsion beim Absaugen in das Rohr eine 180° Wendung erfährt. Damit hierbei keine zu hohen Strömungsabrisse an dem Absaugrohr entstehen ist bevorzugt zusätzlich eine Art Bördel an das Ansaugrohr angebracht. Dadurch verringert sich der Reibungswiderstand bei der Umlenkung des Emulsionsstroms durch den größeren Bördelrand erheblich. Somit ist eine Thrombenbildung auch bei niedriger Skimmerhöhe ausgeschlossen.

Die mit Bettbahnöl beladene Emulsion kann mittels Unterdruck aus der Wanne oder dem Behälter über den Skimmer mittels Rohrverbindung in den Emulgatorfilter eingesaugt werden. Der Unterdruck entsteht bevorzugt dadurch, dass die dem Emulgatorfilter nachgeschaltete Saug- und Druckpumpe die Emulsion aus diesem abpumpt. Da es bei dem Unterdruck zur Entgasung der Emulsion kommt wird mittels Gasniveauregelung sichergestellt, dass das überschüssige Gas aus dem Emulgatorfilter abgeführt wird.

Sind mehrere Maschinen an einer Filteranlage angeschlossen kann die mit Bettbahnöl beladene Emulsion auch mittels Tauchpumpe aus der Wanne oder dem Behälter über den Skimmer mittels Rohrverbindung in eine Sammelleitung eingepumpt werden und dann in den Emulgatorfilter eingesaugt werden.

Sind mehrere Maschinen an einer Filteranlage angeschlossen kann die gereinigte Emulsion beim Verlassen der Filteranlage in einer Verteilungsleitung und dann über die Maschinen-Anschlussleitung und über eine automatisches Niveaudossierung mittels automatisches Ventil z.B. als Schwimmerventil zurück in die Wanne oder dem Behälter fließen. Dabei entsteht in der Wanne oder dem Behälter eine Querströmung so dass die gereinigte Emulsion die mit Bettbahnöl beladene Emulsion zur Absaugung über den Skimmer bewegt.

Die Gasniveau-Regulierung stellt bevorzugt sicher, dass sich der Füllstand im Emulgatorfilter-Behälter immer im gleichen Niveau befindet, so dass der Rohrquerschnitt des tangentialen Zufluss bevorzugt mittig auf die Oberfläche trifft. Die mit Öl/Fett beladene Emulsion wird durch die tangentiale Einströmung in Rotation um die Behälterachse gelenkt, so dass eine gleichmäßige Oberflächenströmung entsteht. Dabei können sich die leichteren Öl/Fettbestandteile (z.B. Bettbahnöl) von dem Emulsionsstrom lösen so dass diese an der Oberfläche aufschwimmen. Filterelemente, die in ihrer Dichte leichter als die Dichte der Emulsion sind, schwimmen bevorzugt in der Oberfläche der Emulsion, so dass diese durch die Rotationsströmung mit an der Oberfläche zirkulieren. Durch die rotierende Strömung stoßen die Filterelemente zusammen und zerkleinern dabei den Öl-Fettfilm zu kleinen Mikrotropfen, die dann durch die Adhäsionskraft der Emulsion mitgeführt werden.

Die Ausführung der Filterelemente als runder Körper ist hierbei von Vorteil, da es bei Ecken und Kanten (Würfel, Quader, Prismen oder Hohlzylinder) unweigerlich zum Abrieb und zum Verkanten der Filterelemente kommt. Da aber eine geschlossene Kugel nicht den gewünschten Mischeffekt und Zerkleinerungseffekt hat, ist diese in ihrer Ausführung mittels Plättchen erstellt. Die Kugel ist vorteilhaft als einstückiges Spritzgussformteil hergestellt und besteht aus beabstandeten plattenförmigen Elementen, die als zwei Halbschalen zusammengesetzt sind und eine am Äquator um 90° versetzte Anordnung die Kreuzpunkte bilden und dort beim Spritzgießen miteinander verfließen und dabei zu einem einstückigen Element zusammengeformt werden. Zwischen den einzelnen Platten befinden sich Zwischenräume, die entlang der die Zwischenräume begrenzenden Wände große Einströmflächen bilden, so dass es an den Kanten der Blättchen zu Verwirbelungen kommt, die dann zum gewünschten Zerkleinerungseffekt des Öl-Fettfilms führen.

In einer vorteilhaften Ausführung der Niveauregulierung steht vertikal im Achsenzentrum des Emulgator-Filterbehälters ein Rohrzylinder, der beginnend unterhalb des Behälterdeckels nach unten in diesen führt, so dass die Rotationsströmung um diesen erfolgt, und es zu keinem Strömungsabriss im Achsenzentrum kommt und sich hier ein Öl-Fettfilm aufbaut. Um die überschüssigen Gase aus dem Kopfraum des Emulgator-Filterbehälters zu entfernen und dabei sicherzustellen, dass die Niveauoberfläche gleichbleibend ist, werden die Gase unterhalb des Deckels in den zentrisch angeordnete Rohrzylinder abgeführt. Ein im Durchmesser kleinerer Rohrzylinder ist im Deckel befestigt und abgedichtet. Dieser führt in seiner Länge auf die Niveauoberfläche von der Emulsion, so dass die überschüssigen Gase beim unterschreiten der Emulsions-Niveaus in den Rohrzylinder einströmen. Sind die überschüssigen Gase abgeführt, strömt an deren Stelle Emulsion in den Rohrzylinder, dieser wird dann bevorzugt in der Niveaukammer detektiert und somit zur Ein/Aus-Schaltung der Gasabfuhr mittels Gaspumpe benutzt. Um sicherzustellen, dass sich kein Ölteppich in der Niveauregulierung einspült wird die Emulsion bevorzugt vom unteren Niveaubereich des Emulgator-Filters zugeführt.

Damit sichergestellt ist, dass die Rotationsströmung der Kugeln nicht gestört wird, ist bevorzugt unterhalb der Niveauoberfläche der Raum nur mit Emulsion befüllt, so dass die darunterliegende Filterelementschüttung keinen Kontakt mit den aufschwimmenden Kugeln bekommt. Zusätzlich dient dieser Emulsionsraum zur Strömungsberuhigung, so dass aus der Rotationsströmung eine Vertikalströmung wird. Die Filterelemente haben bevorzugt die gleiche Form wie die aufschwimmen den Kugeln, die oben beschrieben sind, sind aber aus einem Material, das schwerer als die Emulsion ist, so dass diese als Filterbett auf dem Siebboden liegen.

Die Emulsion fließt bevorzugt vertikal nach unten in den Emulgatorfilter-Behälterboden. Dabei umströmt die Emulsion die Filterelemente, die bevorzugt aus einem diffusionsfähigen Kunststoff, bevorzugt aus Polyamid, hergestellt sind. Hierbei entsteht eine bis zu 10% Beladung der Filter durch die Porositätseigenschaft des Werkstoffs. Dabei diffundieren Flüssigkeiten, Salze und Gase in das Filtermaterial und sorgen somit für einen ständigen osmotischen Austausch zwischen der Emulsion und der Filterkugel. Dadurch siedeln sich bevorzugt anaerobe Bakterien auf der Oberfläche der Filterkugel an und werden dann durch den osmotischen Austausch ständig mit Energie versorgt und können so besser die überschüssigen Salze abbauen. Der so entstehende osmotische Druck kann sogar einen Bakterienrasen durchströmen, da es dabei zu hohen Druckdifferenzen kommen kann. Hierbei ist sichergestellt, dass durch diesen ständigen osmotischen Druckausgleich die Zwischenräume der Filterkugelplatten nicht verblocken.

Die so angereicherte und vorfiltrierte Emulsion fließt aus dem Emulgatorfilterboden und wird bevorzugt durch eine Saug-Druckpumpe in den Adhäsionsfilter-Behälter gepumpt. Dabei wird die Emulsion im Injektor mit Gas (z.B. Luft) beladen, so dass dann eine schaumartige Emulsion im Kopfraum und im Gasemulsionsverteilerraum entsteht. Mittels Rieselelement wird dann bevorzugt die schaumartige Emulsion auf die darunter angeordnete Filterkugelschüttung verteilt, so dass sich beim vertikalen Abfließen der Emulsion diese mit Gas (Sauerstoff) anreichert. Hierbei wird durch das unterschiedliche Adhäsionverhalten der Emulsion und der Öle/Fette die Phasen getrennt, so dass sich aus den Ölen/Fetten die Gasblasen bilden, die dann auf den Polyamid Kugeln zusammenlaufen und durch die Schwerkraft durch den Siebboden und dann auf die Niveau-Oberfläche tropfen. Durch die unterschiedliche Dichte zwischen der Emulsion (etwa 0,98 kg / dm³) und der Öle/Fette (etwa 0,85 kg / dm³) schwimmen die leichteren Öle/Fette-Gasblasen als Schaum unterhalb des Siebbodens auf der Niveauoberfläche der Emulsions.

Die überschüssigen Gas und der Öl / Fettschaumanteile trennen sich bevorzugt unterhalb des Siebbodens von der Emulsion, so dass die angereicherte Emulsion am Boden des Adhäsionsfilters den Behälter verlässt. Das überschüssige, verbrauchte Gas strömt bevorzugt mit dem Öl/Fettschaum mittels Abluftverbindung in den automatischen Schwimmerableiter. Beim Überströmen der Gase aus dem Adhäsionsfilters in den Schwimmerableiter wird der sich auf der Niveauoberfläche ansammelnden Öl/Fettschaum durch das Platzen der Blasen aufgetrennt, so dass die überschüssigen Gase aus dem automatischen Schwimmerableiter abgeführt werden. Dabei bildet sich ein Ölteppich, der dann über die Ölabscheideverbindungsleitung in das Ölsammelgefäß einströmt. Durch die unterschiedliche Dichte zwischen der Emulsion und dem Öl entsteht eine Unter- Überströmung, so dass beim Einströmen der leichteren Öle/Fette die schwerere Emulsion aus dem Öl- Sammelgefäß in den automatischen Schwimmerabieiter rückströmt und diese dann über den Niveauausgleich verlässt. Das mit Gas angereicherte Öl/Fett trennt sich im Kopfraum des Ölsammelgefäßes, so dass der Gasüberschuss über die Belüftung abgeführt wird. Die sich nach unten aufstauende Öl/Fettschicht wird bevorzugt mittels geeigneter Messtechnik (z.B. Detektor mit einem elektromagnetischen Wechselfeld zur Unterscheidung der dielektrischen Eigenschaften) von der Emulsion unterschieden, so dass ein manuelles oder automatisches Ausschleusen der Öle/ Fette ermöglicht wird.

Die gasangereicherte Emulsion verlässt bevorzugt am Boden des Adhäsionsfilters den Behälter und strömt dann ohne Gasblasen von unten in den Kapillarfilter. In dem Kapillarfilterbehälter sind die gleichen diffusionsfähigen Filterelemente, wie bereits in den ersten beiden Filtern beschrieben, eingesetzt. Hierbei strömt die angereicherte Emulsion entgegen der Schwerkraft über die Filterelemente so dass es dabei zur kapillaren Rückhaltung der restlichen Öle/Fette zwischen den Hohlräumen der Filterplatten kommt. Die gereinigte Emulsion fließt dann im Kopfraum des Kapillarfilterbehälters aus diesem heraus, so dass mittels Rohr- oder Schlauchverbindung diese in die Wanne oder in Behälter zurückgeführt wird. Hierbei entsteht in dem Behältnis eine Querströmung so dass die Emulsion erneut zum Kühlen und Schmieren des Werkstücks und Werkzeugs eingesetzt wird. Im Bedarfsfall kann die Reinigung der Emulsion von der Wanne oder dem Behälter unterbrochen werden. Dann kann der Emulsionsstrom zwischen dem Ausgang des Kapillarfilters und dem Eingang des Emulgatorfilters im Bypass kurzgeschlossen werden. Somit kann eine angepasste Gasversorgung der Bakterien gewährleistet werden.

Die Erfindung betrifft also insbesondere eine Filteranlage zum Entfernen und/oder Neutralisieren von ungelösten Ölen, Fetten und Salzen auf/in wasserhaltigen Emulsionen aus Behältern und Wannen die zur Vorhaltung und Lagerung von Emulsionen verwendet werden, die zur Kühlung und Schmierung von Werkstücken und Werkzeugen bei der Bearbeitung eingesetzt werden, mit wenigstens
- einer Vorrichtung als tangentialer Zulauf
- in den Emulgatorfilter
- einem Injektor zur Gasanreicherung,
- einem Adhäsionsfilter mit automatischem Entlüfter
- ein Öl- Sammelgefäß mit Ablauf und
- einem Kapillarfilter, wobei
die Filteranlage als Einheit die Emulsion die unlöslichen Öl-Fetttropfen mechanisch, physikalisch und biologisch behandelt, so dass dann die Öl-Fettschicht aus dem Filtersystem ausgeschieden wird.

In einer bevorzugten Ausführungsform kann der Eintritt als tangentialer Zulauf zum Emulgatorfilter und Austritt vom Kapillarfilter dann als Rücklauf in eine bestehende Rohrleitung einer z.B. zentralen Filteranlage ergänzend zwischengeschaltet werden.

In einer bevorzugten Ausführungsform ist zum Absaugen der Emulsion und des Öl-Fettfilms mittels Skimmer aus der Emulsions-Wanne/ Behälter, ein Skimmer Absaugung- Anschluss von oben, gegebenenfalls unter Verwendung einer Tauchpumpe vorgesehen.

In einer bevorzugten Ausführungsform ist zum Absaugen der Emulsion und des Öl-Fettfilms mittels Skimmer aus der Emulsions-Wanne/ Behälter, ein Skimmer Absaugung- Anschluss von unten vorgesehen ist.

In einer bevorzugten Ausführungsform ist der Skimmer so ausgebildet, dass sowohl die Emulsion als auch der Öl-Fettfilm von der Emulsions-Oberfläche in den Skimmer eintreten und aus der EmulsionsWanne/ Behälter absaugt werden kann.

In einer bevorzugten Ausführungsform wird der aufschwimmende Öl/Fettfilm über den oberen Rand des Schwimmkörpers einsaugt und dass über den Spalt zwischen dem Zylinder und dem Schwimmkörper mit einer Absaugleistung von 1-100% bevorzugt 10- 90% des Skimmer Zulaufs abgesaugt wird, so dass der Anteil des Öl-Fettfilms kleiner als 1/1, bevorzugt kleiner 1/20 der abgesaugten Flüssigkeitsmenge ist.

In einer bevorzugten Ausführungsform ist die wirksame Skimmer-Saughöhe abhängig von der Förderleistung der Emulsion und der Dichte des Öl-Fettfilms, und der Abwärtsströmung im Skimmer und die Abwärtsströmung >0,1 cm/Sek aber <20 cm/Sek., bevorzugt 1 cm /Sek. und bei einer wirksamen Skimmer-Saughöhe >1 cm aber < 100 cm bevorzugt 10 cm ist.

In einer bevorzugten Ausführungsform weist der Skimmer einen oberen Skimmer- Absaugungs-Anschluss auf und der Skimmerablauf ist mit einem Umlenkbördel bevorzugt im Zentrum des Skimmer positioniert.

In einer bevorzugten Ausführungsform weist der Skimmer einen unteren Skimmer- Absaugungs- Anschluss auf und der Skimmerablauf ist mit einem Umlenkhut bevorzugt im Zentrum des Skimmer positioniert.

In einer bevorzugten Ausführungsform wird die mit Öl-Fettfilm beladene Emulsion mittels Saug-Druckpumpe im Unterdruck über eine Rohr- Schlauchverbindung in den Emulgatorfilter eingesaugt.

In einer bevorzugten Ausführungsform werden durch den Unterdruck im Emulgatorfilter und in der Emulsion die überschüssige Gase über den Gasraum und über die mechanische Niveauregelung und dann über die Automatischer-Niveauregelung aus dem Emulgatorfilter abgeführt.

In einer bevorzugten Ausführungsform ist als mechanische Niveauregulierung ein Rohrzylinder im Achsenzentrum angeordnet, der beginnend unterhalb des Behälterdeckel vertikal nach unten in den Emulgatorfilter führt, so dass um diesen herum eine Rotationsströmung erfolgt, und es zu keinem Strömungsabriss im Achsenzentrum kommt und sich hier kein Öl-Fettfilm aufbaut.

In einer bevorzugten Ausführungsform sind im Emulgatorfilter schwimmende Filterelemente mit einer Dichte von < 1 kg/dm³ vorgesehen und über den Gasraum im Emulgatorfilter die überschüssigen Gase werden unterhalb des Deckels von oben in den zentrisch angeordnete Rohrzylinder, der im gasdurchlässigen Abstand am Deckel gehaltert ist, abgeführt, wobei ein zweiter kleinerer Rohrzylinder, der im Deckel befestigt und abgedichtet ist, bis auf die Niveauoberfläche der Emulsion ragt, so dass die überschüssigen Gase beim Ausdehnen des Gasraum so lange von unten in den kleineren Rohrzylinder einströmen, bis das Rohr durch den Niveauanstieg der Emulsion von der Emulsion verschlossen wird.

In einer bevorzugten Ausführungsform werden die überschüssigen Gase aus dem Emulsionsfilter und aus dem Gasraum abgeführt und dann von unten aus den Filterelementen > 1kg/dm³ eine Öl-Fettfilm freie Emulsion in den Rohrzylinder einströmt, und diese in der automatischen Niveauregulierung zur Schaltung verwendet wird.

In einer bevorzugten Ausführungsform werden die an der Oberfläche des Emulsionsraums im Emulgatorfilter schwimmenden, vorzugsweise kugelförmigen Filterelemente durch den Tangential-Zulauf in Rotationsströmung um die mechanische Niveauregelung versetzt, wobei dabei die Filterelemente bewegt werden und der sich bildenden Öl-Fettfilm in der Rotationsströmung zur Filterelement-Kollision führt, so dass sich kleine Öl-Fetttropfen bilden und diese dann in der Abwärtsströmung mit der Emulsion mitgeführt werden.

In einer bevorzugten Ausführungsform sind die Filterelemente bevorzugt aus einem diffusionsfähigen Kunststoff (Polyamid) gebildet und hierbei bis zu 10% an Flüssigkeiten, Salze und Gase in das Filterelement diffundieren und somit für einen ständigen osmotischen Austausch zwischen der Emulsion und dem Filterelement sorgen, so dass sich bevorzugt anaerobe Bakterien auf der Oberfläche des Filterelement ansiedeln, die dann vom osmotischen Austausch ständig mit Energie versorgt werden und dabei einen Teil der überschüssigen Salze abbauen.

In einer bevorzugten Ausführungsform ist das Filterelement mit Adhäsionswirkung bevorzugt in Kugelform und aus Filterplatten mit Kapillarwirkung ausgeführt, wobei der Werkstoff bevorzugt Polyamid ist, da sich durch den ständigen osmotischen Druckausgleich die Zwischenräume nicht verblocken.

In einer bevorzugten Ausführungsform fließt die Emulsion durch den Siebboden aus dem Emulgatorfilter und durch die Saug-Druckpumpe über den Injektor mit Gas-/ Luftversorgung beladen und dann in den Adhäsionsfilter gepumpt wird, wobei dabei im Gasemulsionsverteilerraum eine schaumartige Emulsion entsteht, die mittels Rieselelement auf die darunter angeordnete Filterelemente verteilt und somit die Emulsion mit Gase, angereichert wird.

In einer bevorzugten Ausführungsform trennen sich die überschüssigen Gase und der Öl / Fettschaum unterhalb des Siebbodens von der Emulsion, so dass die angereicherte Emulsion am Boden des Adhäsionsfilters den Behälter verlässt.

In einer bevorzugten Ausführungsform strömen die überschüssigen Gase mit dem Öl- Fettschaum über die Öl-Fett / Abluftverbindung in den automatischen Entlüfter und sich dabei die Gase auf der Niveauoberfläche mit dem Öl- Fettschaum ansammelnden und es dann zum Platzen der Blasen kommt, so dass die überschüssigen Gase aus dem automatischen Entlüfter abgeführt werden.

In einer bevorzugten Ausführungsform strömt die Öl-Fettschicht über die Öl-Abscheideverbindungsleitung in das Öl-Sammelgefäß ein und durch die unterschiedliche Dichte zwischen der Emulsion und dem Öl / Fettschicht eine Unter- Überströmung entsteht, so dass beim Einströmen der leichteren Öl-/ Fettschicht die schwerere Emulsion aus dem Öl-Sammelgefäß in den automatischen Entlüfter rückströmt und diese dann über den Niveauausgleich verlässt.

In einer bevorzugten Ausführungsform trennt sich die mit Gasen angereicherte Öl-/ Fettschicht im Kopfraum des Öl-Sammelgefäß, so dass der Gasüberschuss über die Belüftung abgeführt wird.

In einer bevorzugten Ausführungsform wird die nach unten aufstauende Öl- Fettschicht mittels Detektor von der Emulsion unterschieden und ein manuelles oder automatisches Ausschleusen der Öl-Fettschicht kann eingeleitet werden.

In einer bevorzugten Ausführungsform verlässt die gasangereicherte Emulsion den Adhäsionsfilter am Boden.

Im Adhäsionsfilter werden die unlöslichen Öle bevorzugt über eine Düse ausgetragen. Hierbei ist die Düsengröße bevorzugt so ausgelegt, dass es keinen Kurzschlussstrom vom Adhäsionsfilter in den Doppelmantel und in die Pumpenströmung kommt damit das Öl die Zeit hat sich von der Emulsion und dem Gas zu trennen. Die Düsengröße ist abhängig von der Umwälzleistung und dem Gaseintrag in Abhängigkeit von dem Durchmesser des Adhäsionsfilters. 1400 L/ h Umwälzleistung benötigen zum Beispiel etwa 100- 200 L/h Gas. Dabei ist die Bohrung bevorzugt so ausgelegt, dass diese nicht mit der Zeit zuklebt und dass das Niveau der Emulsion nur gering schwankt. Die Öl-Schaumschicht kann so gut ausgetragen werden.

In einer bevorzugten Ausführungsform verlässt die gasangereicherte Emulsion den Adhäsionsfilter am Boden und strömt ohne Gasblasen von unten in den Kapillarfilter entgegen der Schwerkraft über die Filterelemente, so dass es dabei zur kapillaren Rückhaltung der restlichen Öle/Fette zwischen den Hohlräumen der Filterplatten kommen kann. Die gereinigte Emulsion fließt dann im Kopfraum des Kapillarfilters aus der Filteranlage in den Rücklauf.

In einer bevorzugten Ausführungsform kann im Bedarfsfall die Reinigung der Emulsion als tangentialer Zulauf im Eintritt, zum Emulgatorfilter unterbrochen werden und der Emulsionsstrom wird zwischen dem Ausgang des Kapillarfilters und dem Eingang des Emulgatorfilter im Bypass kurzgeschlossen um weiterhin eine Gas/Luftversorgung der Bakterien zu gewährleistet.

In einer bevorzugten Ausführungsform werden der Reinigungseffekt der Emulsion von dem Öl- Fettfilm in der Filteranlage anhand der Sauerstoff- und der Leitwertmessung überwacht und kontrolliert, so dass die Leitwert-Sonde (LS) und die Sauerstoff-Sonde (SS) als Regelgröße der Filteranlage und zur Qualitäts-Beurteilung der Emulsion verwendet werden kann.

Die Erfindung betrifft also insbesondere auch eine Filteranlage zum Entfernen und/oder Neutralisieren von ungelösten Ölen, Fetten und Salzen auf/in wasserhaltigen Emulsionen aus Behältern und Wannen, die zur Vorhaltung und Lagerung von Emulsionen verwendet werden, die zur Kühlung und Schmierung von Werkstücken und Werkzeugen bei der Bearbeitung eingesetzt werden, mit a) wenigstens einer Vorrichtung als tangentialer Zulauf in einen b) Emulgatorfilter, c) einem Injektor zur Gasanreicherung, d) einem Adhäsionsfilter mit automatischem Entlüfter, e) ein Öl- Sammelgefäß mit Ablauf und f) einem Kapillarfilter, wobei die Filteranlage als Einheit die Emulsion und die unlöslichen Öl- Fetttropfen mechanisch, physikalisch und biologisch behandelt, so dass dann die Öl/Fettschicht aus dem Filtersystem ausgeschieden wird.

Bevorzugt ist eine erfindungsgemäße Filteranlage, wobei die Filteranlage zum Absaugen der Emulsion und des Öl-Fettfilms aus der Emulsions-Wanne/ Behälter einen Skimmer aufweist, wobei bevorzugt ein Skimmer Absaugungs-Anschluss von oben oder von unten, gegebenenfalls unter Verwendung einer Tauchpumpe vorgesehen ist.

Bevorzugt ist eine erfindungsgemäße Filteranlage, wobei der Skimmer so ausgebildet ist, dass sowohl die Emulsion als auch der ÖlFettfilm von der Emulsions-Oberfläche in den Skimmer eintreten und aus der Emulsions-Wanne/ Behälter absaugt werden kann.

Bevorzugt ist eine erfindungsgemäße Filteranlage, wobei durch den Unterdruck im Emulgatorfilter und in der Emulsion die überschüssigen Gase über den Gasraum und über die mechanische Niveauregelung und dann über die automatische Niveauregelung aus dem Emulgatorfilter abgeführt werden.

Bevorzugt ist eine erfindungsgemäße Filteranlage, wobei im Emulgatorfilter schwimmende Filterelemente mit einer Dichte von kleiner als 1 kg/dm³ vorgesehen sind.

Bevorzugt ist eine erfindungsgemäße Filteranlage, wobei die Filterelemente des Emulgatorfilters, des Adhäsionsfilters und/oder des Kapillarfilters aus einem diffusionsfähigen Kunststoff gebildet sind. Bevorzugt ist eine erfindungsgemäße Filteranlage, wobei die Filterelemente des Emulgatorfilters aus einem diffusionsfähigen Kunststoff gebildet sind.

Bevorzugt ist eine erfindungsgemäße Filteranlage, wobei bis zu 10% an Flüssigkeiten, Salzen und Gasen in ein Filterelement diffundieren und somit für einen ständigen osmotischen Austausch zwischen der Emulsion und dem Filterelement sorgen, so dass sich bevorzugt anaerobe Bakterien auf der Oberfläche des Filterelement ansiedeln, die dann vom osmotischen Austausch ständig mit Energie versorgt werden und dabei einen Teil der überschüssigen Salze abbauen.

Bevorzugt ist eine erfindungsgemäße Filteranlage, wobei die Filterelemente (aus Polyamid bestehen oder überwiegend Polyamid enthalten.

Bevorzugt ist eine erfindungsgemäße Filteranlage, wobei die Filterelemente kugelförmig sind.

Bevorzugt ist eine erfindungsgemäße Filteranlage, wobei die Filterelemente aus Filterplatten mit Kapillarwirkung ausgeführt sind.

Die Erfindung betrifft auch eine Filteranlage zum Entfernen und/oder Neutralisieren von ungelösten Ölen, Fetten und Salzen auf/in wasserhaltigen Emulsionen aus Behältern und Wannen die zur Vorhaltung und Lagerung von Emulsionen verwendet werden, die zur Kühlung und Schmierung von Werkstücken und Werkzeugen bei der Bearbeitung eingesetzt werden, wobei die Filteranlage Filterelemente aufweist, wobei die Filterelemente zumindest überwiegend aus zu einem Körper zusammengefassten, nebeneinanderliegenden Kunststoffplatten bestehen, wobei als Basismaterial für die Kunststoffplatten ein Kunststoff mit einer Wasseraufnahmefähigkeit von größer 1% verwendet wird.

Das Basismaterial für die Kunststoffplatten ist Polyamid. Das Filterelement ist kugelförmig.

Bevorzugt ist eine erfindungsgemäße Filteranlage, wobei die Filteranlage alternativ oder auch zum Entfernen von Schwebeteilchen, insbesondere Metallabrieben verwendet wird. Es zeigte sich, dass die erfindungsgemäße Filteranalage überraschend auch zu einer Reduktion von Metallabrieben in der Emulsion führt.

Die Erfindung betrifft auch ein Verfahren zum Entfernen und/oder Neutralisieren von ungelösten Ölen, Fetten und Salzen auf/in wasserhaltigen Emulsionen aus Behältern und Wannen die zur Vorhaltung und Lagerung von Emulsionen verwendet werden, die zur Kühlung und Schmierung von Werkstücken und Werkzeugen bei der Bearbeitung eingesetzt werden, wobei in dem Verfahren eine erfindungsgemäße Filteranlage eingesetzt wird.

Die Erfindung betrifft auch die Verwendung eines Filterelements zum Entfernen und/oder Neutralisieren von ungelösten Ölen, Fetten und Salzen auf/in wasserhaltigen Emulsionen aus Behältern und Wannen, die zur Vorhaltung und Lagerung von Emulsionen verwendet werden, die zur Kühlung und Schmierung von Werkstücken und Werkzeugen bei der Bearbeitung eingesetzt werden, wobei das Filterelement zumindest überwiegend aus zu einem kugelförmigen Körper zusammengefassten, nebeneinanderliegenden Kunststoffplatten besteht, wobei als Basismaterial für die Kunststoffplatten ein Kunststoff mit einer Wasseraufnahmefähigkeit von größer 1% verwendet wird, wobei das Basismaterial für die Kunststoffplatten Polyamid ist.

Es zeigte sich überraschender Weise, dass sich die in der DE 10 2009 043 110 A1 beschriebenen Filterelemente nicht nur zur Reinigung von Teichanlagen und Aquarien eignen, sondern auch zum Entfernen und/oder Neutralisieren von ungelösten Ölen, Fetten und Salzen auf/in wasserhaltigen Emulsionen aus insbesondere Behältern und Wannen, die zur Vorhaltung und Lagerung von Emulsionen verwendet werden, die zur Kühlung und Schmierung von Werkstücken und Werkzeugen bei der Bearbeitung eingesetzt werden. Dies Filterelemente können daher auch bevorzugt in der erfindungsgemäßen Filteranlage eingesetzt werden, sowohl im Emulgatorfilter als auch im Adhäsionsfilter als auch im Kapillarfilter. Die Beschreibung der DE 10 2009 043 110 A1 ist somit Bestandteil der vorliegenden Anmeldung.

Erfindungsgemäß ist dabei ein Filterelement, bestehend aus zu einem Körper zusammengefassten, nebeneinanderliegenden Kunststoffplatten, wobei als Basismaterial für die Kunststoffplatten ein Kunststoff mit einer Wasseraufnahmefähigkeit von größer 1% verwendet wird. Erfindungsgemäß ist das Basismaterial Polyamid. Bevorzugt ist das Polyamid PA 6, insbesondere PA 6 E.

Bevorzugt ist das Basismaterial ein Polyamid mit einer Dichte von größer 1 kg/dm³. Alternat ist das Basismaterial ein Polyamid mit einer Dichte kleiner 1 kg/dm³. Durch die Dichte kann in vorteilhafter Weise beeinflusst werden ob die Filterelemente auf der Emulsion schwimmen oder in der Emulsion untergehen.

Bevorzugt ist das Filterelement als einstückiges, ballartiges also kugelförmiges Spritzgussformteil ausgebildet.

Bevorzugt wird das Filterelement aus wenigstens zwei Spritzgussformteilen, die lösbar mit einander verbunden werden können, gebildet.

In einer Ausführungsform können dem Basismaterial Zusatzstoffe, wie z. B. Glaskugeln, Luft, Gas oder Fasern, vor dem Spritzen beigemischt werden.

Bevorzugt ist eine erfindungsgemäße Verwendung, wobei das Basismaterial für die Kunststoffplatten Polyamid ist. Bevorzugt ist eine erfindungsgemäße Verwendung, wobei das Filterelement kugelförmig ist.

Bevorzugt ist eine erfindungsgemäße Verwendung in einer erfindungsgemäßen Filteranlage.

Bevorzugt ist eine erfindungsgemäße Verwendung, wobei zusätzlich noch Schwebekörper, insbesondere Metallabriebe aus der Emulsion entfernt werden.

Die vorliegende Erfindung betrifft auch ein Verfahren zum Entfernen und/oder Neutralisieren von ungelösten Ölen, Fetten und Salzen auf/in wasserhaltigen Emulsionen aus Behältern und Wannen, die zur Vorhaltung und Lagerung von Emulsionen verwendet werden, die zur Kühlung und Schmierung von Werkstücken und Werkzeugen bei der Bearbeitung eingesetzt werden, wobei ein Öl-Fettfilm und Teile der Emulsion a) mit einem Skimmer aus einem Behälter oder einer Wanne abgesaugt werden und b) durch erfindungsgemäße Filterelemente gefiltert werden. Bevorzugt wird das Verfahren in einer erfindungsgemäßen Filteranlage durchgeführt. Die vorliegende Erfindung betrifft auch Filterelemente und Filteranlagen zum Entfernen von Schwebeteilchen, insbesondere Metallabrieben verwendet wird sowie deren entsprechende Verwendung und entsprechende Verfahren. Es zeigte sich, dass die hier beschriebenen Filterelemente, insbesondere in einer Filteranalage überraschend auch zu einer Reduktion von Metallabrieben in der Emulsion führt.

Die Erfindung betrifft daher auch eine Filteranlage zum Entfernen von Metallabrieben aus wasserhaltigen Emulsionen aus Behältern und Wannen, die zur Vorhaltung und Lagerung von Emulsionen verwendet werden, die zur Kühlung und Schmierung von Werkstücken und Werkzeugen bei der Bearbeitung eingesetzt werden, wobei die Filteranlage Filterelemente aufweist, wobei die Filterelemente zumindest überwiegend aus zu einem Körper zusammengefassten, nebeneinanderliegenden Kunststoffplatten bestehen, wobei als Basismaterial für die Kunststoffplatten ein Kunststoff mit einer Wasseraufnahmefähigkeit von größer 1% verwendet wird.

Die Erfindung betrifft auch die Verwendung eines Filterelements zum Entfernen Metallabrieben aus wasserhaltigen Emulsionen aus Behältern und Wannen, die zur Vorhaltung und Lagerung von Emulsionen verwendet werden, die zur Kühlung und Schmierung von Werkstücken und Werkzeugen bei der Bearbeitung eingesetzt werden, wobei das Filterelement zumindest überwiegend aus zu einem Körper zusammengefassten, nebeneinanderliegenden Kunststoffplatten besteht, wobei als Basismaterial für die Kunststoffplatten ein Kunststoff mit einer Wasseraufnahmefähigkeit von größer 1% verwendet wird.

Erfindungsgemäß ist das Basismaterial für die Kunststoffplatten Polyamid ist. Erfindungsgemäß ist das Filterelement kugelförmig. Bevorzugt hat das Filterelement einen Durchmesser von mindesten 25 mm. Bevorzugt hat das Filterelement einen Durchmesser von etwa 33 mm.

Erfindungsgemäß ist die Filteranlage über einen Zulauf und einen Ablauf mit dem Behälter oder der Wanne verbunden.

Bevorzugt ist die Verwendung in einer erfindungsgemäßen Filteranlage.

Die Erfindung betrifft auch ein Verfahren zum Entfernen von Metallabrieben aus wasserhaltigen Emulsionen aus Behältern und Wannen, die zur Vorhaltung und Lagerung von Emulsionen verwendet werden, die zur Kühlung und Schmierung von Werkstücken und Werkzeugen bei der Bearbeitung eingesetzt werden, wobei ein Öl-Fettfilm und Teile der Emulsion a) mit einem Skimmer aus einem Behälter oder einer Wanne abgesaugt werden und b) durch erfindungsgemäße Filterelemente gefiltert werden. Bevorzugt wird das Verfahren in einer erfindungsgemäßen Filteranlage durchgeführt. Weitere bevorzugte Ausführungsformen ergeben sich aus den Unteransprüchen.

Im Folgenden wird die Erfindung anhand der in den Zeichnungen dargestellten Ausführungsbeispielen und einer beispielhaften Anwendung weiter erläutert und beschrieben.

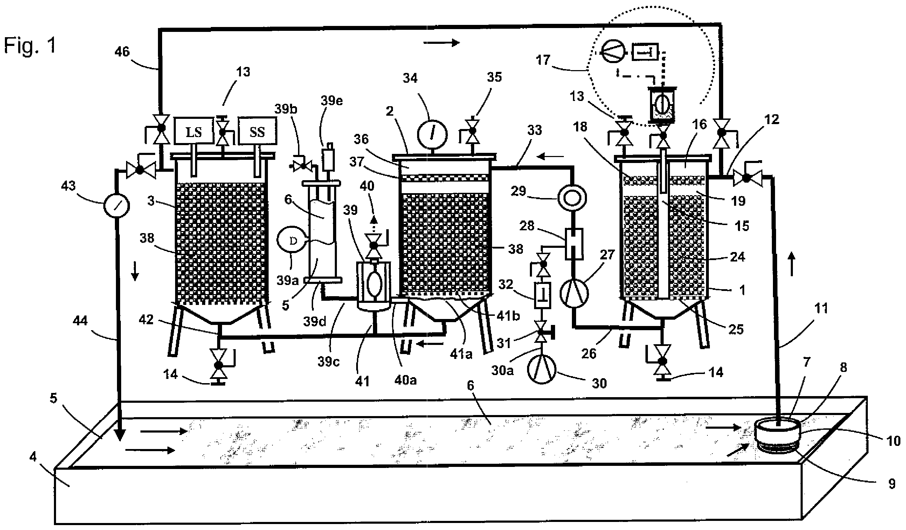

Fig. 1 zeigt eine schematische Darstellung der erfindungsgemäßen Filteranlagen-Einheit in Ausführung als Fließbild.

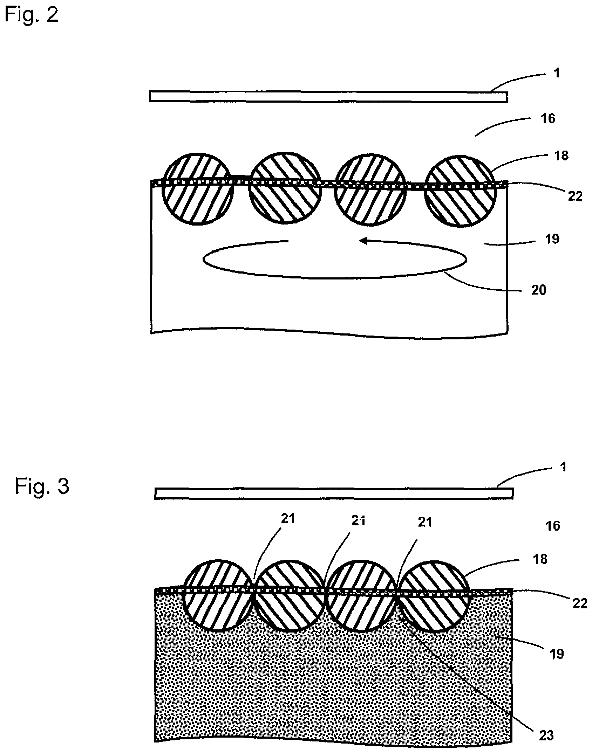

Fig. 2 zeigt eine schematische Darstellung der erfindungsgemäßen Rotationszirkulation der Filterkugeln im Emulgatorfilter.
Fig. 3 zeigt eine schematische Darstellung der erfindungsgemäßen Kollision der Filterkugeln in der Rotationszirkulation die im Emulgatorfilter zur Öl-Fettbehandlung dient.
Fig. 4 zeigt eine Querschnitts- Darstellung des erfindungsgemäßen Skimmers mit Anschluss von Oben.
Fig. 5 zeigt eine Querschnitts- Darstellung des erfindungsgemäßen Skimmers mit Anschluss von unten.

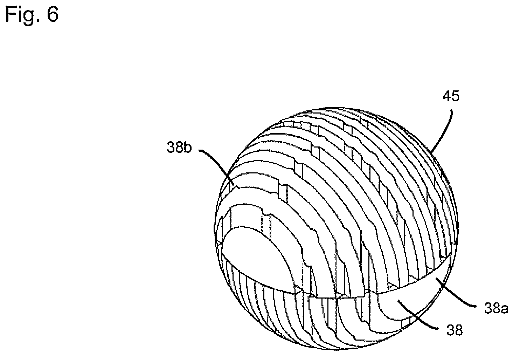

Fig. 6 zeigt eine räumliche Darstellung des erfindungsgemäßen Filterelements als Filterkugeln.
Fig. 7 zeigt eine Querschnitts- Darstellung des erfindungsgemäßen Skimmers mit integrierter Tauchpumpe und in
Fig. 8 mit automatischem Ventil als Schwimmerventil.
Fig. 9 zeigt eine Filteranlage zum Aufbereiten von Emulsionen aus mehreren Bearbeitungsmaschinen.
Fig. 10 zeigt die Partikelgrößenverteilung des Ölanteils in der Emulsion während des Einsatzes einer erfindungsgemäßen Filteranlage bei einer Zerspanungs-Drehmaschine.
Fig. 11 zeigt eine bevorzugte Ausführungsform des Adhäsionsfilters oder einer Filteranlage zum Entfernen von Metallabrieben.
Fig. 12 zeigt eine bevorzugte Ausführungsform des Entlüfters und des Öl-Sammelgefäßes.

Eine Ausführungsform der erfindungsgemäßen Filteranlage ist als Ganzes schematisch in Fiq. 1 dargestellt.

Die Anlage ist vorzugsweise insgesamt dazugehörig zu einer Zerspannungsanlage und deren Vorratswanne und oder Behälter in der die Emulsion vorgehalten wird. Die Zu-und Ablaufleitung zu der Emulsionswanne und oder Behälter zu der zu reinigenden Emulsion sind dazugehörig.

Die wesentlichen Komponenten der Filteranlage sind zum Einen die Absaugung der Emulsion 5 im Zusammenspiel mit dem anteiligen Öl-Fettfilm 6 mittels Skimmer 7 als Skimmer Absaugung- Anschluss von oben 7a oder bei mehreren Maschinen mit Unterstützung einer Tauchpumpe im Skimmer und nachgeschalteter Sammelleitung oder als Skimmer Absaugung-Anschluss von unten 7b in Abhängigkeit von Art und Ausführung der Emulsions-Wanne/ Behälter 4, des Emulgatorfilters 1, des Adhäsionsfilters 2 sowie des Kapillarfilters 3. Die Funktionsweise und der Aufbau der einzelnen Komponenten werden nachfolgend beschrieben.

Die zu reinigende wasserhaltige Emulsion 5 die zur Kühlung und Schmierung von Werkstücken und Werkzeugen bei der Bearbeitung von Werkstücken eingesetzt wird, wird mittels Skimmer 7 und über den Skimmerablauf 11, wie in näheren Aufbau anhand von Fiq. 4 und Fiq. 5 beschrieben und dann mittels Rohr oder Schlauchleitung und dann als Tangentialzulauf 12 in den Emulgatorfilter 1 zur Aufbereitung eingeleitet.

Der Skimmer 7 saugt gleichzeitige die Emulsion 5 und den Öl-Fettfilm 6 von der Emulsionsoberfläche, in der Emulsions-Wanne/ Behälter 4 ab. Der aufschwimmende Öl/Fettfilm 6 wird über den Rand des Schwimmkörpers 10 einsaugt. Der Schwimmkörper 10 wird von Gasen 30a als Gaspolster an der Emulsions-Oberfläche getragen, dabei wird dieser durch einen feststehenden Zylinder der in den Schwimmkörper 10 hineinragt in Position gehalten. Zwischen dem Zylinder und dem Schwimmkörper besteht ein Spalt, der in seiner Breite zur Absaugleistung von 1-100 % bevorzugt 90% des Emulsionszufluss von unterhalb der Emulsionsoberfläche als Skimmer Zulauf unten 9 abgesaugt wird. Dieser Effekt stellt sicher, dass der Emulsion / Öl-Fettfilm 6- Anteil kleiner 1/1 bevorzugt kleiner 1/20 der abgesaugten Flüssigkeitsmenge ist.

Die wirksame Skimmer-Saughöhe 7c ist abhängig von der Förderleistung der Emulsion 5 und der Dichte des Öl-Fettfilms 6, und der Abwärtsströmung im Skimmer 7. Diese bewegt sich bei einer Abwärtsströmung von >0,1 cm/Sek. aber <20 cm/Sek., bevorzugt 1 cm /Sek bei einer wirksamen Skimmer Saughöhe 7c von >1 cm und < 100 cm bevorzugt 10 cm.

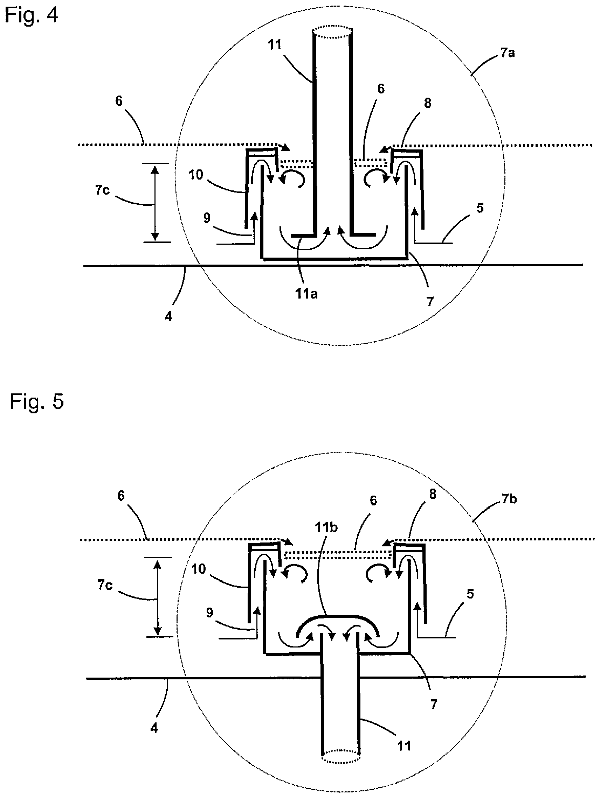

Der feststehende Zylinder des Skimmer 7 ist mit einem geschlossenen Boden versehen. Bei der Ausführung Fig. 4 mit Absaugung nach oben wird zur Verhinderung der Luft-Thrombenbildung der Skimmerablauf 11 mit einem Umlenkbördel 11a bevorzugt im Zentrum des Skimmer 7 positioniert und mittels Abstandshalter fest im Becher fixiert. Bei der Ausführung Fiq.5 mit Absaugung nach unten wird zur Verhinderung der Luft-Thrombenbildung der Skimmerablauf 11 mit einem Umlenkhut 11b bevorzugt im Zentrum des Skimmer 7 positioniert und mittels Abstandshalter fest im Becher fixiert.

Die mit Öl-Fettfilm 6 beladene Emulsion 5 wird mittels Unterdruck aus der Emulsions-Wanne/ Behälter 4 über den Skimmer 7 mittels Rohr-Schlauchverbindung in den Emulgatorfilter 1 eingesaugt. Dabei entsteht beim Abpumpen mittels Saug-Druckpumpe 27 ein Unterdruck im Emulgatorfilter 1 und in der Emulsion 5. Dieser wird gleichzeitig zur Entgasung der Emulsion 5 verwendet, um dann das überschüssige Gas mittels automatischer Niveauregelung 17 aus dem Emulgatorfilter 1 abzuführen.

Die mechanische Niveauregulierung 15 ist ein im Achsenzentrum befindlicher Rohrzylinder der beginnend unterhalb des Behälterdeckel vertikal nach unten in den Emulgatorfilter 1 führt, so dass die Rotationsströmung 20 um diesen erfolgt, und es zu keinem Strömungsabriss im Achsenzentrum kommt und sich hier ein Öl-Fettfilm 6 aufbaut.

Zur Sicherstellung der Niveauoberfläche der in der Rotationsströmung 20 schwimmenden Filterelemente < 1 kg/dm³ 18 werden im Gasraum des Emulgatorfilters 1 die überschüssigen Gase unterhalb des Deckels von oben in den zentrisch angeordneten Rohrzylinder, der im gasdurchlässigen Abstand am Deckel gehaltert ist, abgeführt. Ein zweiter kleinerer Rohrzylinder, der im Deckel befestigter und abgedichtet ist, ragt bis auf die Niveauoberfläche der Emulsion, so dass die überschüssigen Gase 30a beim Ausdehnen des Gasraums 16 so lange von unten in den kleineren Rohrzylinder einströmen bis durch den Niveauanstieg das Rohr von der Emulsion 5 verschlossen wird.

Sind die überschüssigen Gase 30a aus dem Emulgatorfilter 1 und aus dem Gasraum 20 abgeführt strömt von unten aus den Filterelementen > 1 kg/dm³ 24 eine Öl-Fettfilm 6 freie Emulsion 5 in den Rohrzylinder, dieser wird dann in der Automatischen- Niveauregulierung detektiert und zur Schaltung dieser verwendet.

An der Oberfläche des Emulsionsraums 19 im Emulgatorfilter 1 schwimmen Filterelemente < 1kg/dm³ 18 bevorzugt in Kugelform 45, die durch den Tangential-Zulauf 12 in Rotationsströmung 20, um die mechanische Niveauregelung 15 versetzt werden. Dabei bewegen die Filterelemente < 1 kg/dm³ 18 den sich bildenden Öl-Fettfilm 6 wie in Fiq. 2 mit. In Rotationsströmung 20 führt das zur Filterelement-Kollision 21, die dazu führt, dass sich kleine Öl-Fetttropfen bilden, wie in Fiq. 3 gezeigt, die dann in der Abwärtsströmung mit der Emulsion 5 mitgeführt werden.

Die Emulsion 5 umströmt dabei die Filterelemente > 1 kg/dm³ 24 aus einem bevorzugten diffusionsfähigen Kunststoff (Polyamid) hierbei diffundieren bis zu 10% an Flüssigkeiten, Salze und Gase 30a in das Filterelement 38 und sorgen somit für einen ständigen osmotischen Austausch zwischen der Emulsion und dem Filterelement 38. Anaerobe Bakterien siedeln sich bevorzugt auf der Oberfläche des Filterelement 38 an und werden vom osmotischen Austausch ständig mit Energie versorgt und bauen dabei einen Teil der überschüssigen Salze ab.

Das Filterelement 38 ist in Kugelform 45 ausgeführt da die Umströmung einer Kugelschüttung für eine optimale Widerstandsverteilung garantiert. Der osmotische Druck der durch den bevorzugten Werkstoff (Polyamid) entsteht kann sogar einen Bakterienrasen durchströmen da es dabei zu hohen Druckdifferenzen kommen kann. Hierbei ist sichergestellt, dass durch diesen ständigen osmotischen Druckausgleich die Zwischenräume der Filterkugelplatten nicht verblocken.

Die Emulsion fließt durch den Siebboden 25 aus dem Emulgatorfilter 1 und wird durch die Saug-Druckpumpe 27 in den Adhäsionsfilter 2 gepumpt. Zuvor wird die Emulsion 5 im Injektor 28 mit der Gas-/Luftversorgung 30 versorgt. Dabei entsteht im Gasemulsionsverteilerraum 36 eine schaumartige Emulsion 5. Mittels Rieselelement 37 wird dann die schaumartige Emulsion 5 auf die darunter angeordnete Filterelemente 38 bevorzugt in Kugelform 45 verteilt, und somit die Emulsion 5 mit Gase 30a, Sauerstoff angereichert. Hierbei wird durch die unterschiedliche Adhäsionwirkung 38a der Emulsion 5 und der Öle / Fette die Phasen getrennt, so dass sich aus den Ölen / Fetten die Gasblasen bilden, die dann auf den Polyamid Kugeln zusammenlaufen und durch die Schwerkraft durch den Siebboden 25 und dann auf die Niveau-Oberfläche 41a tropfen. Durch die unterschiedliche Dichte zwischen der Emulsion 5 (etwa 0,98 kg / dm³) und der Öle / Fette (etwa 0,85 kg / dm³) schwimmen die leichteren Öle / Fette- Gasblasen als Öl-Fettschaum 41 b unterhalb des Siebbodens 25 auf der Niveauoberfläche 41 a der Emulsion 5.

Die überschüssigen Gas 30a und der Öl / Fettschaum 41b trennen sich unterhalb des Siebbodens 25 von der Emulsion 5, so dass die angereicherte Emulsion 5 am Boden des Adhäsionsfilters 2 den Behälter verlässt. Das überschüssige, verbrauchte Gas 30a strömten mit dem Öl- Fettschaum 41 b mittels Öl-Fett / Abluftverbindung 40a in den automatischen Entlüfter 39. Beim Überströmen der Gase 30a aus dem Adhäsionsfilters 2 in den automatischen Entlüfter 39 wird der sich auf der Niveauoberfläche ansammelnden Öl- Fettschaum 41b durch das Platzen der Blasen aufgetrennt, so dass die überschüssigen Gase 30a aus dem automatischen Entlüfter 39 abgeführt werden. Dabei bildet sich ein Öl- Fettschicht 6a der dann über die Öl-Abscheideverbindungsleitung 39c in das Öl- Sammelgefäß 39d einströmt. Durch die unterschiedliche Dichte zwischen der Emulsion 5 und dem Öl / Fett entsteht eine Unter- Überströmung, so dass beim Einströmen der leichteren Öle- Fette die schwerere Emulsion 5 aus dem Öl- Sammelgefäß 39d in den automatischen Entlüfter 39 rückströmt und diese dann über den Niveauausgleich 41 verlässt. Das mit Gasen 30a angereicherte Öl- Fett trennt sich im Kopfraum des Öl- Sammelgefäß 39d, so dass der Gasüberschuss über die Belüftung 39e abgeführt wird. Die sich nach unten aufstauende Öl-Fettschicht 6a wird mittels geeignete Messtechnik (z.B. Detektor 39a mit einem elektromagnetischen Wechselfeld zur Unterscheidung der dielektrischen Eigenschaften) gemessen. So können die Öle/ Fette von der Emulsion 5 unterschieden werden, so dass ein manuelles oder automatisches Ausschleusen der Öle/ Fette ermöglicht wird.

Die gasangereicherte Emulsion 5 verlässt am Boden des Adhäsionsfilters 2 den Behälter und strömt dann ohne Gasblasen von unten in den Kapillarfilter 3. In dem Kapillarfilter 3-Behälter sind die gleichen diffusionsfähigen Filterelemente 38, wie bereits in den ersten beiden Filtern beschrieben, eingesetzt. Hierbei strömt die angereicherte Emulsion 5 entgegen der Schwerkraft über die Filterelemente 38, so dass es dabei zur kapillaren Rückhaltung der restlichen Öle/Fette zwischen den Hohlräumen der Filterplatten kommen kann. Die gereinigte Emulsion 5 fließt dann im Kopfraum des Kapillarfilters 3 aus diesem als Rücklauf 44 heraus, so dass mittels Rohr- oder Schlauchverbindung diese in die Emulsions-Wanne/ Behälter 4 zurückgeführt wird. Hierbei entsteht in der Emulsions- Wanne / Behältnis 4 eine Querströmung, so dass die Emulsion 5 erneut zum Kühlen und Schmieren des Werkstücks und Werkzeugs eingesetzt wird.

Im Bedarfsfall kann die Reinigung der Emulsion 5 von der Emulsions- Wanne / Behälter 4 unterbrochen werden. Dann kann der Emulsionsstrom zwischen dem Ausgang des Kapillarfilters 3 und dem Eingang des Emulgatorfilters 1 im Bypass 46 kurzgeschlossen werden. Somit kann eine angepasste Gas/Luftversorgung 30 der Bakterien durch den Durchflussregler 31 gewährleistet werden.

Die Emulsion 5 fließt entgegen der Schwerkraft von Behälterboden nach oben im Kopfraum des Kapillarfilters 3. Dabei entspannen sich die gepufferten Gase 30a aus der Emulsion 5 da der Druckwiederstand im Kapillarfilter 3 geringer ist als im Adhäsionsfilter 2. Diese Gasentspannung kann mittels Sauerstoff-Sensor SS ermittelt werden da dieser in seiner Einstellung die Sättigungsgrenze der Flüssigkeit, der Emulsion 5 anzeigt. Z.B. Süßwasser kann bei 20 °C Normaldruck 1013 mbar etwa 9,1 mg/l an Sauerstoff puffern, das sind dann 100 % Sättigung. Im Überdruck von etwa 100 mbar (1113 mbar) sind das dann etwa 10 mg/l und folglich 110 % Sättigung. Dieser Druck entspannt sich beim Aufwärtsstrom im Kapillarfilter 3, da die statische Flüssigkeitssäule nach oben im Kapillarfilter 5 abnimmt. Durch die Druckreduktion entspannen die gepufferten Gase 30a und erzeugen dabei kleine Gasbläschen die dann auf Ihre Oberfläche Rest-Öle und Fette aufnehmen, die nicht im Adhäsionsfilter 2 und dann im automatischen Entlüfter 39 und im Öl- Sammelbehälter 39d zurückgehalten wurden. Eine Leitwertsonde die ebenso im Kopfraum des Kapillarfilter eingebaut ist misst den Salzgehalt der Emulsion 5. Gemessen wird dabei in µS/cm dieser Wert ist bei Destilliertem- Wasser 0 µS/cm da folglich keine Salze vorhanden sind bei häuslichen Leitungswasser liegt der Wert bei etwa 400- 700 µS/cm bei einer Emulsion kann dieser Wert auch weit höher sein da es durch die Verdunstung des Wassers aus der Emulsion und durch den Schmutzeintrag bei der Bearbeitung auch weit über 1000 µS/cm sein kann. Eine Leitwertsonde funktioniert nach dem Prinzip des Widerstands, dabei wir eine elektrische Spannung zwischen zwei z.B. Edelstahlelektroden angelegt so dass wenige Millivolt an der Plus-Elektrode mittels Flüssigkeits- Widerstand der Emulsion in Abhängigkeit der Temperatur an der zweiten Minuselektrode gemessen wird. Hierbei hat sich gezeigt, dass in Flüssigkeiten ohne Öl- Fettfilm 6 ein nahezu stabiler Wert angezeigt wird. Strömen mit Öl oder Fette beladene Gasblasen über die Elektroden so wird zeitweise der Kontakt zwischen der Flüssigkeit und der Elektrode verringert und somit auch der gemessene und angezeigte Leitwert durch die Öl- Fettanhaftungen. Dabei kann es zu Messwert- Schwankungen von mehreren 100 µS/cm ja sogar mehrere 1000 µS/cm kommen. Diese Schwankungen stabilisieren sich je geringer der Öl-Fettschaum in der Emulsion 5 ist. Dieser Sachverhalt kann daher als Indikator und als Stell- und Regelgröße für eine gereinigte Emulsion 5 verwendet werden und kann daher zur Steuerung des Druckwiderstands, der Emulsionsströmung und zur Gasanreicherung verwendet werden.

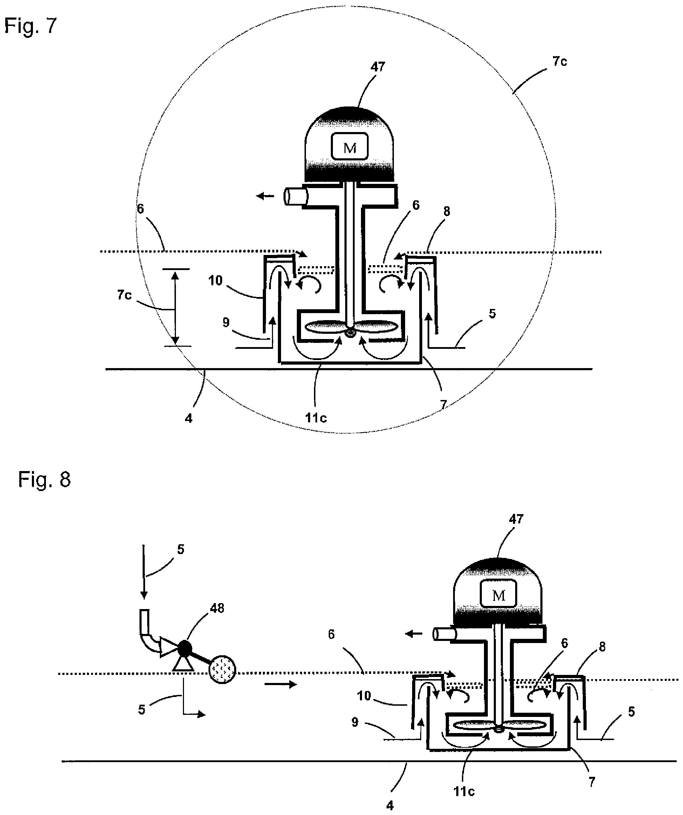

Die Figur 7 zeigt ein Ausführungsbeispiel, bei dem im Skimmer 7 eine Tauchpumpe 47 eingesetzt wird, um den Ölfettfilm abzupumpen. Die Figur 8 zeigt im Rücklauf der Filteranlage zu der EmulsionsWanne /-Behälter einen Zulaufregler in Form eines automatisches Schwimmerventils 48 in der Emulsion, mit dem die Menge des zurückgeführten gereinigten Guts so geregelt wird, dass ein bestimmter Füllstand in der Emulsions-Wanne/Behälter 4 beibehalten werden kann.

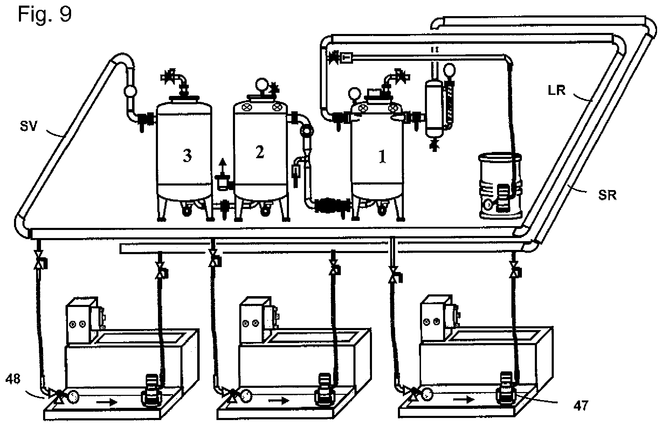

Wie Fig. 9 zeigt, kann die Filteranlage auch zum Aufbereiten von Emulsionen aus mehreren Bearbeitungsmaschinen eingesetzt werden. Die Emulsionen aus den einzelnen Emulsions- Wannen/ Behälter 4 werden dabei bevorzugt mittels Tauchpumpen 47 einer Sammelvorlaufleitung SV zugeführt und gelangen von dort zum Emulgatorfilter 1. Der Rücklauf geschieht über eine Sammelrücklaufleitung SR, von der einzelne Leitungen LR über die Schwimmerventile 48 in die einzelnen Emulsions- Wannen/ Behälter 4 der jeweiligen Maschine führen.

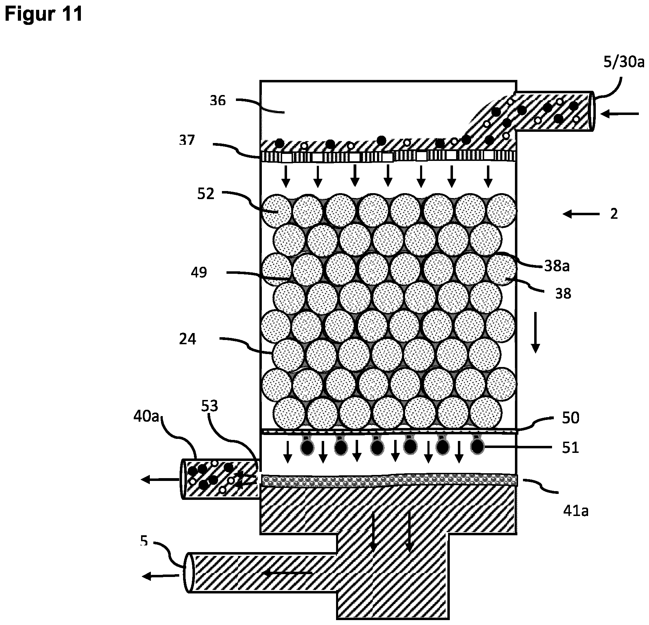

Fig. 11 zeigt eine bevorzugte Ausführungsform des Adhäsionsfilters 2 oder einer Filteranlage zum Entfernen von Metallabrieben. Die mit BBS-Öl beladene Emulsion 5 ist mit Luft-Gas 30a angereichert und strömt dann im Zulauf in den Kopfraum des Adhäsionsfilters 2. Mittels Rieselelement 37 wird dann das Gemisch auf die Filterelementen 38 verteilt, so dass es dabei zu Reibung auf den Filterelementen 38 kommt, die sich dabei positive aufladen. Die negative beladenen Abriebe (z.B. Metallabriebe) in der Emulsion 5 haften dabei auf der Oberfläche der Polymaid-Filterkugeln 38. Gleichzeitig entsteht eine Zwickelflüssigkeit 49 bevorzugt aus dem unlöslichen BBS-Ölen, die dann als nachfließende Haftflüssigkeit mit der Schwerkraft nach unten fließen. Mit Zunahme der Öl-Fettschicht auf den Filterelementen 38 bilden sich dann an der Unterseite des Siebbodens 50 Öl-Tropfen 51, die dann auf die Niveauoberfläche 41a tropfen und zur Öl-Fettschicht führen. Diese auf der Emulsionsoberfläche aufschwimmende Öl-Fettschicht wird dann mittels Gasüberschuss durch eine Düse 53, zum Beispiel eine etwa 7 mm Bohrung aus dem Adhäsionsfilter 2 getrieben. In der Öl-Fettschaum / Abluftverbindung 40a wird dabei das Öl-Fettschaum 41a abgeführt. Die Niveauoberfläche bewegt sich auf und ab in dem Niveau der Düse 53, zum Beispiel etwa 7- 8 mm, da der Luftüberschuss die Emulsion 5 nach unten verdrängt, so dass beim Verdrängen der Düsenquerschnittsfläche die Gase abfließen können und dabei den Öl-Teppich mit abführen. Der Düsenstrahl entspannt sich nach der Düse 5 in einen größeren Durchmesser als die Düse, so dass sich anschließend die Gase von dem unlöslichen Ölen trennen können.

Es zeigte sich überraschend, dass sich Metallabriebe als Partikelanhaftung 52 an den Filterelement 38 durch Reibungsladung ablagern. Daher kann ein solcher Adhäsionsfilter 2 auch zum Entfernen von Metallabrieben verwendet werden ohne dass dabei zwingend eine Abtrennung, insbesondere gründliche Abtrennung des Öls/Fetts aus der Emulsion erfolgen muss und ohne, dass weitere Filter, beispielsweise ein Emulgatorfilter und/oder ein Kapillarfilter vor oder nachgeschaltet sind. Vielmehr eignet sich der Adhäsionsfilter 2 an sich als Filteranlage zum Entfernen von Metallabrieben.

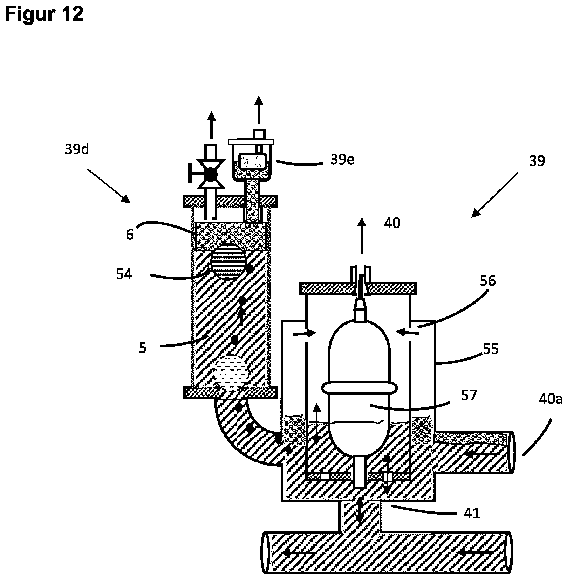

Fig. 12 zeigt eine bevorzugte Ausführungsform des Entlüfters und des Öl-Sammelgefäßes. Mittels mechanischen (aber auch mit elektronischer Niveaudetektion und automatischen Ventil möglichen) Schwimmerventils wird bei Gasüberschuss das Gas über den Kopfraum des Entlüfters 39 ausgeschieden. Hierbei arbeitet der Schwimmkörper, der das Auslassventil öffnet und verschließt, durch die Auftriebskraft, die dieses durch den Anstieg oder Abfalls des Niveaus erhält. Dabei bewegt sich das Niveau nur wenige mm bis cm auf und ab. Durch das leichtere unlösliche BBS-Öl entsteht an der Niveauoberfläche eine Öl-Fettschicht, die mit zunehmenden BBS-Öl sich nach unten ausbreitet und dabei die Emulsion verdrängt. Unterhalb der Niveauoberfläche vom Schwimmkörper strömt die immer dicker werdende Öl-Fettschicht über die Öl-Ablaufverbindungsleitung in das Öl-Sammelgefäß 39d. Da das Öl-Sammelgefäß 39d im Kopfraum mittels mechanisch-automatischer Belüftung den Gasüberschuss entlässt, wird das Öl-Sammelgefäß bei Betriebsstart mit Emulsion befüllt. Diese wird dann durch das Einströmen des leichteren BBS-Öls nach unten in den Doppelmantel 55 des automatischen Entlüfters 39 verdrängt und fließt dann aus dem Niveauausgleich 41 in den Kapillarfilter 3. Da die Gas-Ölaustragung vom Adhäsionsfilter 2 über die Düse 53 in die Abluftverbindung 40a zun automatischen- Entlüfter 39 pulsierend ist, wird mittels Doppelmantel 55 der Zustrom auf den Schwimmkörper 57 verhindert, so dass sich die überschüssigen Gase im Doppelmantel 55 von dem BBS-Öl trennen und dann mittels Ausgleichsbohrungen 56 in den Schwimmerkopfraum einströmen. Hierbei wird ein störendes auf und ab des Schwimmkörpers 57 verhindert, so dass der Niveauausgleichung für den Schwimmkörper 57 von unten mittels sauberer Emulsion vollzogen wird.

Das Öl-Sammelgefäß 39d mit der Belüftung 39e weist eine Schwimmerkugel 54 auf, die einen Rücklauf des Öl-Fettfilms 6 bei einem Niedrigstand der Emulsion 5 im Öl-Sammelgefäß 39d verhindert, da sie dann auf dessen Boden absinkt und den Einlauf verschließt (gestrichelte Kugel in Fig. 12).

### Beispiel: Einsatz einer erfindungsgemäßen Filteranlage bei einer ZerspanungsDrehmaschine

Eine erfindungsgemäße Filteranlage wurde an einer Zerspanungs-Drehmaschine vom Typ Tatung- Okuma ES-L8 II- M (Made in Taiwan Serien Nr. ME063) angeschlossen. Diese Maschine hat einen hohen Verbrauch an Bettbahn-Schmieröl (BBS-Öl) von etwa wöchentlich bis zu 4 L. Die Filteranalage war wie in den Figuren gezeigt aufgebaut.

Aufbau des Skimmer: Die geringe Füllstandshöhe (etwa 70- 120 mm) an Emulsion in den Wannen unterhalb der Zerspanungsmaschinen erschwerten die luftfreie Absaugung der Emulsion mittels Skimmer, da der Skimmeraufbau aus einem feststehenden unteren Innenzylinder und einem übergestülpten und aufschwimmenden Außenzylinder besteht. Der Innenzylinder hat z.B. einen Außendurchmesser von 100 mm, der schwimmende Außenzylinder hat einen um etwa 1- 3 mm größeren Innendurchmesser, so dass der schwimmende Außenzylinder am feststehenden Innenzylinder geführt und positioniert ist. Dabei wird der Auftrieb des Außenzylindes mittels Luftgaskammer im Kopfbereich sichergestellt. Diese Luftauftriebskammer ist durch eine Art zweifache Umfaltung (2 x 90°)in das Innere des Zylinders umgesetzt. Da diese Luftkammer gleichzeitig als Innere Strömungsumlenkung dient ist der Innere Umlenkzylinder wegen des nach unten gerichteten Strömungsbild länger als es die Luftkammer für den Auftrieb notwendig macht. Damit nur so viel Auftrieb entsteht wie es notwendig ist um den Schwimmkörper an der Emulsions-Oberfläche zu halten werden die überschüssigen Luftgase über Niveau- Ausgleichsbohrungen abgeleitet. Diese sind etwas größer als bei reinem Wasser da diese leichter durch die Anhaftungen der BBS- Öle verkleben und somit mehr Gase zurückhalten die dann für mehr Auftrieb und eine schlechtere Oberflächenabsaugung zur Folge hat verhindern (Wasser etwa 3-5 mm DN jetzt DN 7-8 mm). Um eine Höhenniveau- Veränderung der Emulsion von etwa 20- 40 mm auszugleichen, die durch den Verlust bei der Bearbeitung und Verdunstung entsteht, sollte immer genügend Emulsion nachgefüllt werden. Dies kann leicht dazu führen, dass sich der Füllstand beim Nachfüllen der Emulsion über die geführte Obergrenze des äußeren Schwimmzylinders und aus der geführten Zone des Inneren festen Zylinders bewegt. Damit dann der Schwimmkörper nicht aus der Position abdriftet, verhindern bevorzugt z.B. vier senkrechte Rundstäbe zum inneren Radius von 1- 2 mm Abstand zum schwimmenden-Zylinder die Position.

Metallspäne: Beim Absaugen der Emulsionsoberfläche in der Wanne mittels Skimmer wurden aufschwimmende Späne mit eingesaugt. Diese waren zum Teil mehrere 1 cm lang und waren oftmals in Ihrer Form wie ein Ring gerollt, was mit der Werkstückbearbeitung zusammenhängt. Das Aufschwimmen der z.B. bei Stahl mit einer wesentlich größeren Masse der Späne im Faktor 1 zu 8 wird begünstigt durch die Oberflächenanhaftung der leichteren BBS-Öle auf den Spänen, durch den Ölfilm auf der Emulsionsoberfläche, der zugleich für eine höhere Oberflächenspannung der Emulsionsoberfläche zur Folge hat. Diese Späne können zu Verstopfungen des Skimmer und der Filteranlage führen. Um eine Verstopfung der Filteranlage zu vermeiden wurde ein bevorzugter Vorfilter dem Skimmer nachgeschaltet. Im Verlauf des Filterbetriebs wurde durch das herausfiltern der BBS- Öle mittels Emulsionsfilteranlage die Oberfläche von dem aufschwimmenden BBS-Ölen befreit. Somit kam es zu einer starken Reduktion der Oberflächenspannung und damit zu einem geringeren ein Aufschwimmen der Späne und einsaugen in den Skimmer.

Emulsionsverbrauch: Schon nach wenigen Tagen des Betriebs mit der erfindungsgemäßen Filteranlage konnte eine Reduktion des Emulsionsverbrauch durch Anhaftungsverluste an den Spänen festgestellt werden. Das hängt wohl mit der Sättigung der Luftgase in die Emulsion zusammen, die durch die Behandlung in der Emulsionsfilteranlage entsteht, und die dann zu einem besseren Abtropfverhalten führt. Durch die zusätzliche Entfernung der unemulgierbaren BBS-Öle hat sich binnen weniger Wochen der Emulsionsverbrauch um etwa 60% verringert. Dabei haben sich die Ölanhaftungen in den Maschineninnenraum stark reduziert, so dass die Einsichtscheibe für den Maschinenbediener frei von Ölschlieren ist.

Strömungsverlauf in der Filteranlage: Die Strömungsgeschwindigkeit in den Filterstufen ist abhängig von der Belastung durch die unlöslichen BBS-Öle, die in ihrer Dichte (890 g/cm³) leichter als die Emulsion (<1 etwa 970 g/cm³) sind. Ist die Ablaufgeschwindigkeit im Emulgatorfilter zu gering, schwimmen diese auf und bilden in der rotierenden Eintrittsströmung einen Ölteppich, der mit der Zeit immer dicker wird und sich nach oben und nach unten ausbreitet. Durch das Aufschwimmen auf der Emulsionsoberfläche ragt er Ölteppich aus der rotierenden Oberfläche und bindet dabei die Emulsionsaufschwimmenden und leichteren Filterkugeln, so dass sich diese sich nicht mehr um ihre Mittelachse drehen. Durch den Unterdruck im Filter können bei der Entgasung der Emulsion kleine Gasblasen entstehen, die sich im Ölteppich anreichern und dann als Ölschaum in den Schwimmerschalter und damit in den Entgasungsraum drücken. Hierbei kann es zu Schaumverschleppungen in die Abluftpumpe kommen, was zu Störungen und zu Schädigung dieser führen kann. Bei einer Abwärtsströmung von 18 mm / Sekunde kam es zu einer Ölschaumbildung. Ein Optimum ohne Ölschaumbildung ergab sich bei einer Abwärtsströmung von 22 mm / Sekunde. Ein Fachmann kann ohne weiteres eine geeignete Abwärtsströmung auswählen und einstellen.

Filterelemente: Im Emulgatorfilter wurden Filterkugeln mit 12 mm Durchmesser eingesetzt. Hierdurch entsteht in der Abwärtsströmung eine zum Teil turbulente Durchmischung der Emulsion, so dass die löslichen Öle in Verbindung mit den Emulgatoren dabei nachemulgiert werden, so dass die gelösten Öle in den Tropfengrößen zerkleinert werden und dann eine verbesserte Wasserbindung entsteht, die dadurch zu einer höheren Kühlleistung zur Folge hat. In den Turbulenzen werden zum Teil die mitgeführten Feinstabriebe, insbesondere Metallpartikel, von den BBS-Ölen getrennt.

Im Bodenablauf nach dem Emulgatorfilter fördert die Umwälzpumpe die Emulsion durch den Injektor, so dass Luftgas der Emulsion beigemischt wird, die dann gasgesättigt in den Kopfraum des Adhäsionsfilters fließt. Der Emulsionsstrom wurde dann mittels einer Düsenplatte mit 24 Löchern gleichmäßig auf die Filterkugeln verteilt. Diese hatten einen Durchmesser von 33 mm. Mit dieser Größe hatten die Kugeln in ihrer Schüttdichte einen breiteren Luftraum, so dass es nicht zu turbulenten Vermischungen kam. Das BBS-Öl haftete sich auf und zwischen den Kugeln an und bildete dann in einer langsamen gravitativen Abwärtsströmung Tropfen, die dann unterhalb des Siebbodens auf die Emulsionsoberfläche tropften und mit der Luft über eine Austragungsdüsenbohrung aus dem Adhäsionsfilter ausgeschieden wurden. Die Funktionsweise der Abscheidung der unlöslichen BBS-Öle funktioniert dabei, ohne an die Theorie gebunden zu sein, nach dem Prinzip der Massenkonzentration zwischen den Berührungspunkten der Kugeln: Die Filterkugeln bestehen aus Polyamid und sind diffusionsfähig und können etwa 2,5 - 3,5 % Feuchtigkeit aufnehmen. Die BBS-Öle haben eine höhere Adhäsionskraft als die Emulsion und benetzen dadurch die Oberfläche der Filterkugeln. Der im Kraftfeldfreien Raum symmetrisch entstehende Flüssigkeitszwickel wird durch die abwärts gerichtete Trennkraft verformt und nach unten gedrückt. Schließlich bildet sich aus der Zwickelflüssigkeit und der nachströmenden Haftflüssigkeit ein Tropfen, der sich ablöst und einen Restzwickel geringerer Größe zurücklässt.

Emulsionsaufbau in Betrachtung der Öltropfengröße: Kühlschmierstoffe werden bei der spangebenden Bearbeitung von Werkstücken zum kühlen (Wasser), schmieren (Öl) und zur Entfernung von Metallabtrag eingesetzt. Der Maschinen- und Werkzeugverschleiß soll gesenkt werden und die Wärme (bis 1000 °C) soll verringert werden. Bearbeitungen mit hohen Schnittgeschwindigkeiten und hoher Wärmeentwicklung erfordern primär Kühlwirkung. Hier lassen sich die besten Ergebnisse durch wässrige Kühlschmierstoff-Emulsionen oder -Lösungen erreichen. Kühlschmierstoff-Konzentrate werden zur Ausbildung einer stabilen Emulsion mit oberflächenaktiven Stoffen (Emulgatoren) additiviert, die durch Absenkung der Grenzflächenspannung zwischen der Öl- und Wasserphase eine Verteilung der Öltröpfchen im Wasser ermöglichen.

Die Tröpfchen-Größe ist abhängig von der Scherung und von der Reinheit der Emulsion. Messungen haben gezeigt, dass bei einem Ausscheiden von größeren BBS-Öl-Tröpfchen die zu emulgierende Emulsion in Ihrer Feinheit verbessert wird. Das geschieht ohne, dass sich die Emulsionskonzentration reduziert. Vielmehr hat sich herausgestellt, dass die zu messende Konzentration zunimmt weil mehr und feinere Tröpfchen die Emulsion zunehmen lässt. Kleinere Tröpfchen bedeutet weniger Einsatz von Öl für eine gleiche Oberflächenbenetzung und somit eine höhere Wasserbindung, die dann auch eine bessere Kühlleistung zur Folge hat.

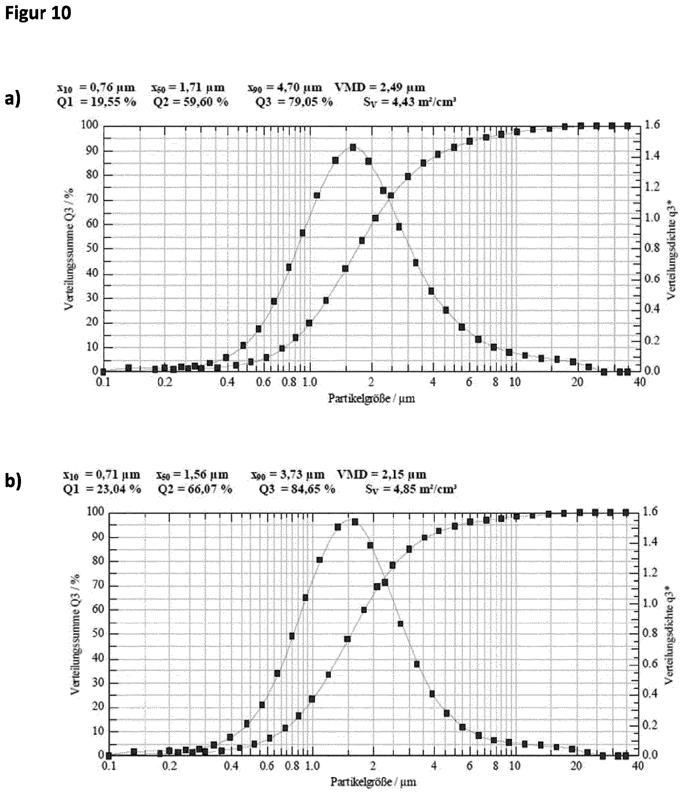

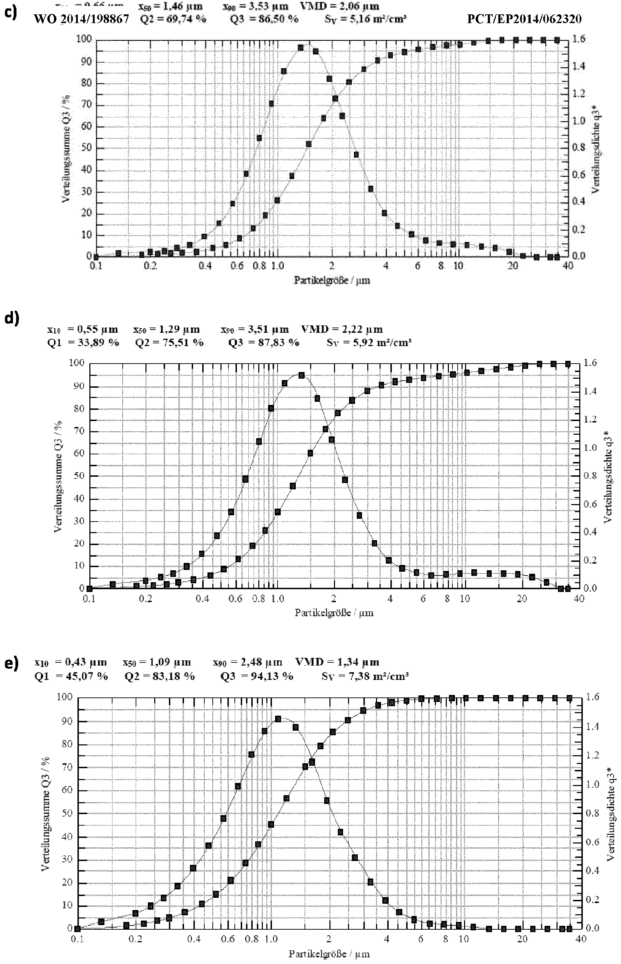

Mit einem QUIXEL-Gerät zur Partikelgrößenanalyse der System-Partikel-Technik, D - 38678 Clausthal-Zellerfeld wurden die Emulsionen auf ihre Größe und Verteilung hin untersucht. Dieses Gerät ist ein Nassdispergiersystem, welches für die Partikelgrößenanalyse in allen Arten von Suspensionen und Emulsionen im Größenbereich von 0,1 µm bis 3,5 mm geeignet ist. Mittels Laserbeugung kann die Tropfengrößenverteilung ermittelt werden. Die Ergebnisse sind in Figur 10 gezeigt.

Bei Inbetriebnahme der Filteranlage wurden die Tropfen, also Partikel, in 3 verschiedenen Größen und im prozentualen Verhältnis ermittelt und angegeben. Wie in Figur 10a gezeigt waren Q1= 19,55 % der Tropfen (Partikel) <0,76 µm, Q2= 59,60% < 1,71 µm und Q3= 79,05% <4,70 µm. Die durchschnittliche Partikelgröße VMD betrug 2,49 µm. Die Oberflächenbenetzung betrug 4,43 m²/cm³.

Mittels Elektronenmikroskop wurden die Tropfen auf ihre Größe und ihre Verteilung untersucht. Dabei wurde sichtbar, dass es in einigen größeren Tropfen Einschlüsse gab. Hierbei handelte es sich um sehr kleine metallische Abriebe, die mit unlöslichen BBS-Ölen umschlossen waren. Dass sich keine größeren Zusammenschlüsse von Metallabriebs-Partikeln bildeten kann mit der Ladung dieser Partikel erklärt werden, wodurch van der Waals Kräfte nicht wirksam werden konnten.

Nach einer Woche Filterbetrieb waren die Tropfen als Partikelgröße kleiner geworden und die Oberflächenbelegung hatte um 9,5% zugenommen, wie in Figur 10b gezeigt ist.

Nach drei Wochen Filterbetrieb waren die Tropfen als Partikelgröße noch kleiner geworden und die Oberflächenbelegung hatte nochmals um 6,4% zugenommen, wie in Figur 10c gezeigt ist.

Nach insgesamt sechs Wochen Filterbetrieb waren , wie in Figur 10d gezeigt, die Tropfen als Partikelgröße nochmals kleiner geworden und die Oberflächenbelegung war auf 5,92 m²/cm³ angestiegen, was eine erneute Zunahme um 14,7% bedeutet.

Nach einem mehrmonatigem Betrieb der Emulsionsfilteranlage wurden etwa 50 bis 60 % der eingefüllten BBS-Öle durch die Filteranlage entfernt. Die Reinheit und die Tropfengröße, gemessen als Partikelgröße waren erneut verbessert, wie sich aus Figur 10e ergibt. Durch das Entfernen der großen Tropfen hat zum einen die Menge an Metallabrieben abgenommen und zum anderen die Emulsionsfeinheit zu genommen. Dabei wurde der gemessene Öl-Anteil (mittels Refraktometer) nicht negative beeinflusst. Ein weiterer Anstieg auf 7,38 m²/cm³ zeigt, dass die Qualität der Emulsion zugenommen hat und in Ihrer Kühleigenschaft erheblich verbessert ist. Vergleicht man die Qualität bei Filterbetriebsstart und der letzten Messung dann ist die Oberflächenbenetzung um 67 % angestiegen.

Metallabrieb: In elektronenmikroskopischen Aufnahmen waren Metalabriebe sichtbar, die von BBS-Öl umhüllt sind. Dadurch erhalten die Metallabriebe einen Dichteausgleich, so dass die Kombination mit dem BBS-Öl eine ähnliche Dichte wie die gelöste Ölemulsion aufweist und somit die Metallabrieb-Partikel in Schwebe bleiben. Dies kann zu Problemen führen, da die Kühlwasserpumpe die Metallabriebe mit der Emulsion ansaugt und diese auf das Werkzeug und Werkstück sprüht, so dass sich diese zum Teil in den Schneidspalt verfangen und dadurch zu einer Standzeitverringerung der Werkzeug-Schneide führen können.

Bei der Untersuchung der Polyamid-Filterkugeln konnte im Verlauf der Filtration insbesondere im Adhäsionsfilter eine Anlagerung von Metallabrieben festgestellt werden, die mit zunehmender Betriebsdauer immer mehr wurde. Ohne an die Theorie gebunden zu sein, wird diese Anlagerung wohl durch elektrostatische Kräfte verursacht, da durch die Strömung mittels Reibungskräfte die Polyamid-Kugeln aufgeladen werden, so dass alle negative geladenen Abriebe, wie Metallverbindungen auf den Kugeln haften.

Durch den Einsatz der erfindungsgemäßen Filteranlage hat der Anteil an Metallabrieben insbesondere auch durch die Anlagerung an die Filterelemente und das Entfernen der großen Tropfen abgenommen, so dass die mit dem Metallabrieb verbundenen Probleme deutlich minimiert werden. Die Beseitigung der Abriebe erhöhen insbesondere die Schneidfähigkeit und erhalten somit eine längere Schneidfähigkeit. Im vorliegenden Versuch war vom Maschinenbediener eine etwa 20- 30%ige Verbesserung zu fühlen.

Nitritbelastung der Emulsion: Die Emulsion wird durch die thermisch Beanspruchung der BBS-Öle auf der Oberfläche der bis zu 1000°C heißen Metallspäne mit dabei entstehendem Nitrit belastet. Durch die Entfernung der BBS-Öle hat sich der übliche wöchentliche Anstieg des Nitritgehalts von etwa 0,5 mg / Liter reduziert. Das hängt mit der Beseitigung der BBS-Öle zusammen, die jetzt nicht mehr auf den heißen Spänen verbrennen.

Bakterieller Einfluss in Abhängigkeit des pH- Werts: Untersuchungen haben ergeben, dass es in der Untersuchungsphase durch die Filteranlage keine negativen Auswirkungen auf die biologische Ansiedlung von Bakterien gab. Dabei wurde festgestellt, dass der stabile pH-Wert zwischen 9 und 10 und der hohe Leitwert von > 5000 µS/cm für eine Bakterienansiedlung limitierend wirkt. Die Bakterienkonzentration in der Kühlschmierstoffemulsion lag im Durchschnitt über die Probenahmezeit bei etwa 2.300 KBE/ml mit Schwankungen zwischen 576 und 4.933 KBE/ml. Diese Konzentrationen können grundsätzlich als niedrig eingeschätzt werden. Die Unterschiede in den Konzentrationen liegen im normalen Schwankungsbereich.

Da die BBS-Öl-Austragung in der Filteranlage mittels angesaugter Luft geschah, wurde zusätzlich ein bevorzugter Sterilluftfilter dem Luftkompressor vorgeschaltet. Da die meisten Bakterien in der Umgebungsluft eine Größe von > 0,3 µm haben, stellt ein Sterilluftfilter mit einer Porenweite von < 0,2 µm die Rückhaltung der Mikroorganismen aus der Luft sicher. Durch die Reduzierung der Bakterienmenge ist aber ein solcher Filter nicht zwingend notwendig.

Nach Inbetriebnahme der Filteranlage war nach zwei Tagen kein fauler Geruch mehr wahrnehmbar was zum einen auf die Entgasung im ersten Filter zurückzuführen ist, und zum anderen auf der Sauerstoffsättigung im Adhäsionsfilter beruht.

Zusammengefasst können folgende Vorteile durch die Verwendung der erfindungsgemäßen Filteranlage erreicht werden:
- Der Kühlschmierstoff (KSS) hat eine hellere Farbe und eine entsprechend bessere Reinheit.
- Es treten keine Faulgerüche auf.
- Der Kühlschmierstoff hat eine flüssigere Konsistenz.
- Die Menge an Metallabrieb ist stark reduziert.
- Die Öl-Metallabrieb Anhaftungen sind deutlich reduziert.
- Es muss dem Kühlschmierstoff durch die kleineren Öltröpfchen weniger Öl zugesetzt werden.
- Es kann ein deutlicher Rückgang an unlöslichen Ölen erreicht werden.
- Der Salzanteil kann deutlich reduziert werden, was zu einer Reduzierung der Schaumbildung und von ausfallenden Schleifpartikeln führt.
- Die Schaumbildung wird reduziert oder sogar verhindert.
- Es lagern sich nur geringe Rückstande an Kühlschmierstoff auf dem Werkstück ab.
- Die Emulsion läuft beim Abblasen besser vom Werkstück ab.
- Der pH Wert bleibt stabil oder steigt leicht, so dass das Bakterienwachstum minimiert wird.
- Der Kühlschmierstoff hat einen höheren Sauerstoffgehalt, so dass die Kühlleistung verbessert wird.
- Die Nitritbildung wird reduziert oder verhindert.
- Reduzierte oder keine Verschlechterung der Kühlschmierstoffqualität bei Standzeiten der Maschine.
- Insgesamt ist die Gesundheitsbelastung durch den Betrieb der Maschine reduziert, insbesondere durch geringere Belastung durch Bakterien, Pilze und Nitrit.

### Bezugszeichenliste

- 1: Emulgatorfilter
- 2: Adhäsionsfilter
- 3: Kapillarfilter
- 4: Emulsions-Wanne/ Behälter
- 5: Emulsion
- 6: Öl-Fettfilm
- 6a: Öl-Fettschicht
- 7: Skimmer
- 7a: Skimmer Absaugung-Anschluss von oben
- 7b: Skimmer Absaugung-Anschluss von unten
- 7c: Wirksame Skimmer-Saughöhe
- 8: Skimmer Zulauf oben
- 9: Skimmer Zulauf unten
- 10: Schwimmkörper
- 11: Skimmerablauf
- 11a: Umlenkbördel
- 11 b: Umlenkhut
- 11c: Ansaugung
- 12: Tangential-Zulauf
- 13: Abspülventil
- 14: Spülflüssigkeit Zulauf
- 15: Mechanische-Niveauregulierung
- 16: Gasraum
- 17: Automatische Niveauregulierung
- 18: Filterelemente < 1 kg / dm³
- 19: Emulsionsraum
- 20: Rotationsströmung
- 21: Filterelement-Kollision
- 22: Öl-Fetttropfen
- 23: Emulsionsbildung
- 24: Filterelemente > 1 kg / dm³
- 25: Siebboden
- 26: Ablauf- Emulgatorfilter
- 27: Saug-Druckpumpe
- 28: Injektor
- 29: Schauglas
- 30: Gas-/Luftversorgung
- 30a: Gase
- 31: Durchflussregler
- 32: Rückflussverhinderer
- 33: Zulauf- Adhäsionsfilter
- 34: Drucküberwachung
- 35: Entlüftung
- 36: Gasemulsionsverteilerraum
- 37: Rieselelement
- 38: Filterelemente
- 38a: Adhäsionswirkung
- 38b: Kapillarwirkung
- 39: Automatischer- Entlüfter
- 39a: Detektor (Öl/ Wasser / Emulsion)
- 39b: Ablauf (Öl/ Wasser/ Emulsion)
- 39c: Öl- Abscheideverbindungsleitung
- 39d: Öl- Sammelgefäß
- 39e: Belüftung
- 40: Abluft
- 40a: Öl- Fettschaum / Abluftverbindung
- 41: Niveauausgleich
- 41a: Niveauoberfläche (Öl/ Wasser / Emulsion)
- 41b: Öl- Fettschaum
- 42: Zulauf Kapillarfilter
- 43: Temperaturüberwachung
- 44: Rücklauf
- 45: Kugelform
- 46: Bypass
- 47: Tauchpumpe
- 48: Automatisches Schwimmerventil
- 49: Zwickelflüssigkeit
- 50: Siebboden
- 51: Öltropfen
- 52: Partikelanhaftung
- 53: Düse
- 54: Schwimmkugel
- 55: Doppelmantel
- 56: Ausgleichsbohrung
- 57: Schwimmkörper
- LS: Leitwert- Sonde (Messwert in pS/cm)
- SS: Sauerstoff- Sonde (Messwert in % Sättigung der Emulsion in Abhängigkeit der Temperatur)
- SV: Sammelvorlaufleitung
- SR: Sammelrücklaufleitung

## Patentansprüche

1. Filteranlage zum Entfernen von Metallabrieben aus wasserhaltigen Emulsionen aus Behältern und Wannen und/oder zum Entfernen und/oder Neutralisieren von ungelösten Ölen, Fetten und Salzen auf/in wasserhaltigen Emulsionen aus Behältern und Wannen, wobei die Behältern und Wannen zur Vorhaltung und Lagerung von Emulsionen verwendet werden, die zur Kühlung und Schmierung von Werkstücken und Werkzeugen bei der Bearbeitung eingesetzt werden, wobei die Filteranlage Filterelemente (18, 24, 38, 45) aufweist, wobei die Filterelemente zumindest überwiegend aus zu einem kugelförmigen Körper zusammengefassten, nebeneinanderliegenden Kunststoffplatten bestehen, wobei als Basismaterial für die Kunststoffplatten ein Kunststoff mit einer Wasseraufnahmefähigkeit von größer 1% verwendet wird, wobei das Basismaterial für die Kunststoffplatten Polyamid ist, wobei die Filteranlage einen Zulauf und einen Ablauf umfasst, über die sie mit dem Behälter oder der Wanne verbunden sein kann und wobei die Filteranlage zum Absaugen der Emulsion aus den Behältern und Wannen einen Skimmer aufweist.

2. Filteranlage nach Anspruch 1, wobei die Filterelemente einen Durchmesser von mindesten 25 mm haben.

3. Filteranlage nach einem der vorherigen Ansprüche, wobei die Filterelemente eine Dichte von kleiner als 1 kg/dm³ haben.

4. Verwendung eines Filterelements (18, 24, 38, 45) zum Entfernen und/oder Neutralisieren von ungelösten Ölen, Fetten und Salzen auf/in wasserhaltigen Emulsionen aus Behältern und Wannen, die zur Vorhaltung und Lagerung von Emulsionen verwendet werden, die zur Kühlung und Schmierung von Werkstücken und Werkzeugen bei der Bearbeitung eingesetzt werden, wobei das Filterelement zumindest überwiegend aus zu einem kugelförmigen Körper zusammengefassten, nebeneinanderliegenden Kunststoffplatten besteht, wobei als Basismaterial für die Kunststoffplatten ein Kunststoff mit einer Wasseraufnahmefähigkeit von größer 1% verwendet wird, wobei das Basismaterial für die Kunststoffplatten Polyamid ist.

5. Verwendung nach Anspruch 4, wobei zusätzlich Schwebekörper, insbesondere Metallabriebe aus der Emulsion entfernt werden.

6. Verfahren zum Entfernen von Metallabrieben aus wasserhaltigen Emulsionen aus Behältern und Wannen und/oder zum Entfernen und/oder Neutralisieren von ungelösten Ölen, Fetten und Salzen auf/in wasserhaltigen Emulsionen aus Behältern und Wannen, die zur Vorhaltung und Lagerung von Emulsionen verwendet werden, die zur Kühlung und Schmierung von Werkstücken und Werkzeugen bei der Bearbeitung eingesetzt werden, wobei ein Öl-Fettfilm und Teile der Emulsion a) mit einem Skimmer aus einem Behälter oder einer Wanne abgesaugt werden und b) durch Filterelemente gefiltert werden, wobei die Filterelemente zumindest überwiegend aus zu einem kugelförmigen Körper zusammengefassten, nebeneinanderliegenden Kunststoffplatten bestehen, wobei als Basismaterial für die Kunststoffplatten ein Kunststoff mit einer Wasseraufnahmefähigkeit von größer 1% verwendet wird, wobei das Basismaterial für die Kunststoffplatten Polyamid ist.

7. Verfahren nach Anspruch 6, wobei die Filterelemente einen Durchmesser von mindesten 25 mm haben.

8. Verfahren nach einem der Ansprüche 6 bis 7, wobei die Filterelemente eine Dichte von kleiner als 1 kg/dm³ haben.

## Claims

1. Filter system for removing metal abrasions from water-containing emulsions from containers and troughs and/or for removing and/or neutralising undissolved oils, greases and salts on/in water-containing emulsions from containers and troughs, wherein the containers and troughs are used for holding and storing emulsions which are used for cooling and lubricating workpieces and tools during machining, wherein the filter system has filter elements (18, 24, 38, 45), wherein the filter elements consist at least predominantly of juxtaposed plastic plates combined to form a spherical body, wherein the base material used for the plastic plates is a plastic with a water absorption capacity of greater than 1%, wherein the base material for the plastic plates is polyamide, wherein the filter system comprises an inlet and an outlet, via which it can be connected to the container or the trough, and wherein the filter system has a skimmer for drawing off the emulsion from the containers and troughs.

2. Filter system according to claim 1, wherein the filter elements have a diameter of at least 25 mm.

3. Filter system according to any one of the preceding claims, wherein the filter elements have a density of less than 1 kg/dm³.

4. Use of a filter element (18, 24, 38, 45) for removing and/or neutralising undissolved oils, greases and salts on/in water-containing emulsions from containers and troughs used for holding and storing emulsions used for cooling and lubricating workpieces and tools during machining, wherein the filter element consists at least predominantly of juxtaposed plastic plates combined to form a spherical body, wherein the base material used for the plastic plates is a plastic with a water absorption capacity of greater than 1%, wherein the base material for the plastic plates is polyamide.

5. Use according to claim 4, wherein suspended bodies, in particular metal abrasions, are additionally removed from the emulsion.

6. Process for removing metal abrasions from water-containing emulsions from containers and troughs and/or for removing and/or neutralising undissolved oils, greases and salts on/in water-containing emulsions from containers and troughs which are used for holding and storing emulsions used for cooling and lubricating workpieces and tools during machining, wherein an oil-grease film and parts of the emulsion a) are sucked out of a container or a trough by means of a skimmer and b) are filtered through filter elements, wherein the filter elements consist at least predominantly of juxtaposed plastic plates combined to form a spherical body, wherein the base material used for the plastic plates is a plastic with a water absorption capacity of greater than 1%, wherein the base material for the plastic plates is polyamide.

7. Process according to claim 6, wherein the filter elements have a diameter of at least 25 mm.

8. Process according to any one of claims 6 to 7, wherein the filter elements have a density of less than 1 kg/dm³.

## Revendications

1. Système de filtrage pour l'élimination d'abrasions métalliques d'émulsions contenant de l'eau provenant de récipients et d'auges et/ou pour l'élimination et/ou la neutralisation d'huiles, de graisses et de sels non dissous sur/dans des émulsions contenant de l'eau provenant de récipients et d'auges, les récipients et auges servant à recevoir et à stocker des émulsions qui sont utilisées pour le refroidissement et la lubrification de pièces et d'outils lors de l'usinage, le système de filtrage présentant des éléments filtrants (18, 24, 38, 45), dans laquelle les éléments filtrants sont constitués au moins principalement de plaques en plastique juxtaposées, combinées pour former un corps sphérique, dans laquelle une matière plastique ayant une capacité d'absorption d'eau supérieure à 1 % est utilisée comme matériau de base pour les plaques en plastique, dans laquelle le matériau de base pour les plaques en plastique est du polyamide, dans laquelle le système de filtration comprend une entrée et une sortie, par lesquelles elle peut être reliée au récipient ou à l'auge, et dans laquelle le système de filtration comprend un écumeur pour retirer l'émulsion des récipients et d'auges.

2. Système de filtration selon la revendication 1, dans laquelle les éléments filtrants ont un diamètre d'au moins 25 mm.

3. Système de filtration selon l'une des revendications précédentes, dans laquelle les éléments filtrants ont une densité inférieure à 1 kg/dm³.

4. Utilisation d'un élément filtrant (18, 24, 38, 45) pour éliminer et/ou neutraliser des huiles, des graisses et des sels non dissous sur/dans des émulsions contenant de l'eau provenant de récipients et d'auges utilisés pour contenir et stocker des émulsions utilisées pour refroidir et lubrifier des pièces et des outils pendant l'usinage, dans lequel l'élément filtrant se compose au moins principalement de plaques en plastique juxtaposées combinées pour former un corps sphérique, dans laquelle une matière plastique ayant une capacité d'absorption d'eau supérieure à 1 % est utilisée comme matériau de base pour les plaques en plastique, dans laquelle le matériau de base pour les plaques en plastique est du polyamide.

5. Utilisation selon la revendication 4, dans laquelle les corps en suspension, en particulier les abrasions métalliques, sont en outre éliminés de l'émulsion.

6. Procédé d'élimination d'abrasions métalliques sur des émulsions contenant de l'eau provenant de récipients et d'auges et/ou d'élimination et/ou de neutralisation d'huiles, de graisses et de sels non dissous sur/dans des émulsions contenant de l'eau provenant de récipients et d'auges qui servent à stocker des émulsions utilisées pour le refroidissement et la lubrification de pièces et d'outils pendant l'usinage, dans laquelle un film huile-graisse et des parties de l'émulsion a) sont aspirés hors d'un récipient ou d'une auge au moyen d'un écrémeur et b) sont filtrés à travers des éléments filtrants, les éléments filtrants étant constitués au moins principalement de plaques en plastique juxtaposées combinées pour former un corps sphérique, dans laquelle une matière plastique ayant une capacité d'absorption d'eau supérieure à 1 % est utilisée comme matériau de base pour les plaques en plastique, dans laquelle le matériau de base pour les plaques en plastique est du polyamide.

7. Procédé selon la revendication 6, dans lequel les éléments filtrants ont un diamètre d'au moins 25 mm.

8. Procédé selon l'une quelconque des revendications 6 à 7, dans lequel les éléments filtrants ont une densité inférieure à 1 kg/dm³.
